# EUROPÄISCHE PATENTSCHRIFT

(11) **EP 3 984 288 B1**
(45) Veröffentlichungstag und Bekanntmachung des Hinweises auf die Patenterteilung: **31.12.2025**
(21) Anmeldenummer: 19734299.1
(22) Anmeldetag: 17.06.2019
(51) Int. Cl.: H04W 52/02, H04W 76/27, H04W 76/28, H04W 52/44, H04W 52/46, H04W 84/12, H04W 84/18, H04W 88/04, H04W 88/08

(54) **ELEKTRONISCHES REGALETIKETTEN-SYSTEM MIT STANDARDISIERTEM FUNK-KOMMUNIKATIONSPROTOKOLL**
ELECTRONIC SHELF LABEL SYSTEM WITH STANDARDIZED RADIO COMMUNICATION PROTOCOL
SYSTÈME D'ÉTIQUETAGE ÉLECTRONIQUE POUR ÉTAGÈRES AVEC PROTOCOLE DE COMMUNICATION RADIO STANDARDISÉ

(43) Veröffentlichungstag der Anmeldung: 20.04.2022
(73) Patentinhaber: VusionGroup GmbH, 8072 Fernitz-Mellach (AT)
(72) Erfinder: RÖSSL, Andreas, 8072 Fernitz-Mellach (AT)
(74) Vertreter: Schneider, Michael
(86) Internationale Anmeldenummer: PCT/EP2019/065894
(87) Internationale Veröffentlichungsnummer: WO 2020/253940

(56) Entgegenhaltungen:
- EP-A1- 2 819 072
- JP-B2- 5 366 201
- US-A1- 2005 150 949
- US-A1- 2007 132 751

## Beschreibung

### Technisches Feld

Die Erfindung betrifft ein elektronisches Regaletiketten-System mit standardisiertem Funk-Kommunikationsprotokoll.

### Hintergrund.

Ein elektronisches Regaletiketten-System, bei dem ein standardisiertes Funk-Kommunikationsprotokoll zur Anwendung kommt, ist beispielsweise aus der US 2018/0270734A1 bekannt. Das System weist mehrere Regaletiketten und einen Access-Point zur Funk-Kommunikation mit besagten Regaletiketten auf. Der Access-Point ist WLAN-fähig. Die Regaletiketten sind Bluetooth-fähig. Zwischen dem Access-Point und den Regaletiketten fungiert eine Relaisstation als Zugangsknoten zu einer der Relaisstation logisch zugeordneten Gruppe von Regaletiketten. Die Relaisstation ist WLAN-fähig, um mit dem Access-Point kommunizieren zu können, und Bluetooth-fähig, um mit den Regaletiketten kommunizieren zu können.

Die Relaisstation zusammen mit den ihr zugeordneten Regaletiketten bildet ein Mesh-Netzwerk, in dem Information, die für ein bestimmtes Regaletikett bestimmt ist, zunächst von der Relaisstation empfangen wird und dann von der Relaisstation an des erste Regaletikette weitergeleitet wird und dann von dem Regaletikett an das nächste Regaletikett weiter kommuniziert wird, bis dass die Information das tatsächlich adressierte Regaletikett erreicht. Um Energieeffizienz vermeintlich sicherzustellen kommen in dem Mesh-Netzwerk Bluetooth Low-Energy Funkmodule zum Einsatz.

Tatsächlich hat sich das bekannte System beim Einsatz von akkumulator- bzw. batteriebetriebenen Relaisstationen und Regaletiketten in mehrfacher Hinsicht als nachteilig erweisen.

So muss grundsätzlich für jedes Mesh-Netzwerk eine separate Relaisstation vorhanden sein. Eine solche Relaisstation weist während dem Verbindungsaufbau und der Kommunikation mit dem Access-Point gemäß einem WLAN-Standard eine relativ hohe Leistungsaufnahme auf, weil diese Funk-Kommunikationsform grundsätzlich "energiehungrig" ist.

Weiterhin erfordert die Weitergabe der Information im Mesh-Netzwerk, dass immer zwei Knoten (Geräte) des Mesh-Netzwerks paarweise aktiv sind. Dies kann die Relaisstation und eines der Regaletiketten sein oder eben zwei Regaletiketten. Ohne weitere Vorkehrungen wird daher die Energieversorgung jener Mesh-Netzwerk-Geräte, die häufiger in Kommunikationsprozesse involviert sind, stärker belastet, als jene von weniger oft aktiven. Dieser Effekt hat nun nichts mit der tatsächlichen Verarbeitung der Information beim letztendlich adressierten Regaletikett zu tun, sondern tritt schon allein wegen der speziellen Art der Weitergabe der Information über eine Kette von Netzwerknoten hinweg auf. Dies hat bei akkumulator- bzw. batteriebetriebenen Relaisstationen zufolge, dass die Energiespeicher in uneinheitlichen Zeitabständen getauscht, bzw. aufgefüllt werden müssen. Der ungleichmäßige Energiebedarf und die große Anzahl an Relaisstationen können zu einer höheren Ausfallrate im System führen und zu ihrer Vermeidung ist ein hoher Wartungsaufwand nötig.

In JP 5 366201 B2 wird ein System zur Kommunikation mit elektronischen Regaletiketten offenbart, bei dem die Etiketten in einen energiesparenden Schlafmodus übergehen können, aus dem sie von einem access point aufgeweckt werden können. Dabei wird insbesondere auch die Adressierung einer Gruppe von Regaletiketten offenbart, falls Daten nur zu einer Untermenge aller Etiketten übertragen werden müssen.

Die Erfindung hat sich vor diesem Hintergrund die Aufgabe gestellt, ein verbessertes Regaletiketten-System bereitzustellen, bei dem die vorstehend genannten Probleme überwunden sind.

### Zusammenfassung der Erfindung

Diese Aufgabe wird durch ein elektronisches Regaletiketten-System nach Anspruch 1 gelöst.

Die Aufgabe wird zudem durch ein Verfahren zum Betreiben eines elektronischen Regaletiketten-Systems nach Anspruch 9 gelöst.

Mit den erfindungsgemäßen Maßnahmen geht der Vorteil einher, dass für die Einleitung des Verbindungsaufbaus zwischen dem Access-Point und einem der Regaletikett-Clients keine Funk-Kommunikation gemäß einem Funkstandard nötig ist. Der Funkstandard kommt erst beim tatsächlichen Verbindungsaufbau mit dem Access-Point zur Anwendung. Während der Regaletikett-Client im Schlafmodus verharrt, reicht es völlig aus, dass von der gesamten Elektronik des Regaletikett-Clients nur der Funk-Aufweckempfänger in Betriebe ist, also mit Strom versorgt wird. Alle anderen elektronischen Komponenten können abgeschaltet, also stromfrei geschaltet sein und/oder nicht getaktet werden. Dies betrifft insbesondere das Client-Funkmodul (Transceiver-Modul), das der Regaletikett-Client zwecks Funk-Kommunikation gemäß dem Funkstandard aufweist.

Dies führt zu einem extrem energieeffizienten Betrieb jedes der Regaletikett-Clients, was summarisch betrachtet die Energieeffizienz des gesamten Regaletiketten-Systems, das in größeren Geschäften mitunter bis zu 20.000 oder mehr Regaletikett-Clients aufweisen kann, verbessert. Dies wiederum hat einen erheblich positiven Einfluss auf die systemweiten Wartungskosten und letztendlich die System-Wartungsintensität, weil die Intervalle für den Batterietausch bei den Regaletikett-Clients extrem verlängert werden. Die Batterien der Regaletikett-Clients können Einwegbatterien oder aufladbar sein.

Letztendlich wird auch das funktechnische Systemverhalten verbessert, weil mit jedem (Versuch eines) Verbindungsaufbau(s) gemäß einem Funkstandard immer ein erheblicher Funkverkehr einhergeht, jedoch die funktechnische Leistungsfähigkeit der üblicherweise zum Einsatz kommenden Access-Points relativ gering ist. Übliche Access-Points können nämlich nur einige wenige Clients gemäß einem Funkstandard bedienen. Gemäß der Erfindung kommt es nun erst dann zu einem solchen (Versuch eines) Verbindungsaufbau(s) gemäß dem Funkstandard, wenn dies über eine von besagtem Funkstandard abweichende Funk-Signal-Übertragung des Funk-Aufwecksignals angefordert wird. Dies trägt auch dazu bei, dass das betreffende Frequenzband oder der betreffende Funkkanal, der zur Funk-Kommunikation gemäß dem Funkstandard benutzt werden soll, ungestört bleibt, und zwar solange, bis tatsächlich ein Funkverkehr gemäß dem Funkstandard benötigt wird. Somit werden auch die Access-Points von unnötigem Funkverkehr entlastet, was ihre Verfügbarkeit und letztendlich ihren Datendurchsatz erheblich positiv beeinflusst.

Weitere, besonders vorteilhafte Ausgestaltungen und Weiterbildungen der Erfindung ergeben sich aus den abhängigen Ansprüchen sowie der nachfolgenden Beschreibung. Dabei können Merkmale der einen Anspruchs-Kategorie entsprechend den Merkmalen der anderen Anspruchs-Kategorie weiterentwickelt werden, sodass die im Zusammenhang mit der einen Anspruchs-Kategorie angeführten Wirkungen und Vorteile auch für die andere Anspruchs-Kategorien vorliegen.

Grundsätzlich kann der Funk-Aufweckempfänger auch einen Ruhezustand und einen Empfangszustand aufweisen und zum Beispiel periodisch von dem Ruhezustand in den Empfangszustand und retour wechseln, wie z.B. alle 50ms. Dieses Betriebsverhalten kann auch die Energieeffizienz positiv beeinflussen. Allerdings kann es in dem Ruhezustand vorkommen, dass der Funk-Aufweckempfänger ein Aufwecksignal verpasst, was im System wieder zu Verzögerungen bei der Kommunikationsabwicklung führen kann. Als besonders vorteilhaft hat es sich daher erwiesen, wenn der Funk-Aufweckempfänger permanent in Empfangsbereitschaft ist. Dies verhindert das Verpassen eines vom Access-Point ausgesandten Funk-Aufwecksignals. Dies erlaubt es dem Access-Point auch zu jedem beliebigen Zeitpunkt das Aufwecksignal auszusenden und im Übrigen auch davon auszugehen, dass der Funk-Aufweckempfänger das ausgesandte Aufwecksignal empfangen hat und dementsprechend reagiert. Diese Maßnahme liefert daher einen erheblichen Beitrag zur Betriebssicherheit. Weiterhin ermöglicht diese Maßnahme auch einen extrem energiesparenden Betrieb des Funk-Aufweckempfängers, insbesondere ohne Modulation der Leistungsaufnahme, sondern mit konstanter Leistungsaufnahme und daher vortrefflich zu prognostizierender maximal zu erwartender Batterielebenszeit. Dies wiederum liefert einen erheblichen Beitrag zur Ausfallssicherheit.

Besonders bevorzugt weist ein solcher Funk-Aufweckempfänger eine Stromaufnahme von weniger als 3 µA bei einer Versorgungsspannung von 1,8 Volt und einer Datenrate von 1 kBit/s auf.

Um eine solche Energieeffizienz zu erreichen, wird bei dem Funk-Aufweckempfänger auf einen Mikroprozessor und unterschiedliche Betriebsmodi verzichtet. Bevorzugt handelt es sich bei dem Funk-Aufweckempfänger um eine integrierte elektronische Schaltung (Integrated Circuit), der eine Reaktionszeit von weniger als 30 ms bei einer Datenrate von 1 kBit/s und eine Empfindlichkeit von - 80 dBm aufweist. Er ist weiterhin dazu ausgebildet in den lizenzfreien ISM-Frequenzbändern 433 MHz, 868 MHz und 2,4 GHz betrieben zu werden.

Der Funk-Aufweckempfänger überwacht den Funkkanal kontinuierlich und scannt den Funkkanal hinsichtlich des Auftretens des Aufwecksignals. Das Aufwecksignal ist durch ein Signalmuster definiert, das dem Funk-Aufweckempfänger bekannt ist.

Beispielhaft sei im Zusammenhang mit einem solchen Funk-Aufweckempfänger auf ein Produkt der Fraunhofer Institute for Integrated Circuits IIS hingewiesen, das unter dem Markennamen RFicient^{®} beworben wird.

Ein in dem Regaletiketten-System zur Anwendung kommender Regaletikett-Client kann unterschiedliche Ausbildungen aufweisen und damit verschiedene Funktionalitäten bereitstellen.

So kann der Regaletikett-Client z.B. zum Erfassen von Umgebungsparametern, wie z.B. zur Temperatur- oder auch Feuchtigkeitserfassung, oder als Eingabeelement bzw. Sensor zum Empfangen einer Eingabeinteraktion eines Benutzers (z.B. zum Erfassen eines Fingerabdrucks, einer Tastenbetätigung oder auch zum Erfassen einer Berührung eines Touchscreens ausgebildet sein) oder auch als Anzeigemedium zur Präsentation einer Information für den Benutzer, nämlich als Regaletikettenanzeige, insbesondere mit einem extrem energiesparenden Bildschirm ausgestattet, konfiguriert bzw. dementsprechend ausgebildet sein.

Der extrem energiesparende Bildschirm kann z. B durch einen LCD-Bildschirm realisiert sein. Insbesondere basiert die zur Anwendung kommende Technologie jedoch auf Electronic-Ink- bzw. Electronic-Paper-Technologie. Ein solche Anzeigeeinheit weist also einen reflektiven Bildschirm im Fachjargon auch Electronic-Paper-Display, abgekürzt EPD, genannt und ist mit Hilfe von "elektronischem Papier", kurz "E-Papier" auch englisch "e-paper" oder "E-Ink" genannt, realisiert. Diese Begriffe stehen im Wesentlichen für das Prinzip einer elektrophoretischen Anzeige, bei der z.B. positiv geladene, weiße Partikel und negativ geladene, schwarze Partikel in einem transparenten zähflüssigen Polymer enthalten sind. Durch kurzzeitiges Anlegen einer Spannung an Elektroden, zwischen denen das Medium aus Partikeln und Polymer angeordnet ist, werden in Betrachtungsrichtung entweder die schwarzen vor den weißen Partikeln platziert oder umgekehrt. Diese Anordnung bleibt dann ohne weitere Energiezufuhr für relativ lange Zeit (z.B. einige Wochen) aufrecht. Segmentiert man die Anzeige entsprechend, so lassen sich z.B. Buchstaben, Zahlen oder Bilder mit relativ hoher Auflösung realisieren, um besagte Informationen anzuzeigen. Ein solcher reflektiver Bildschirm kann jedoch auch mit Hilfe anderer Technologien, die z.B. unter dem Begriff "electrowetting" oder "MEMS" bekannt sind, realisiert sein. Der Bildschirm kann z.B. wie erwähnt zur Schwarz-Weiß-Wiedergabe, zur Graustufen-Wiedergabe, zur Schwarz-Weiß-Rot- oder auch Schwarz-Weiß-Gelb-Wiedergabe ausgebildet sein. Auch sollen zukünftige Entwicklungen mitumfasst sein, die eine Voll-Farb- oder auch Multi-Color-Wiedergabe ermöglichen. Bei einem solchen Bildschirm handelt es sich ganz allgemein um einen reflektiven, also passiven, nicht selbst leuchtenden Bildschirm bei dem die - relativ statische - Informationswiedergabe darauf basiert, dass von einer externen (künstlichen oder natürlichen) Lichtquelle erzeugtes Licht auf den Bildschirm einstrahlt und von dort zum Betrachter reflektiert wird.

In jedem Fall ist ein solcher Regaletikett-Client derart ausgebildet, dass er an einer Regalschiene anbringbar ist. Der Regaletikett-Client weist eine eigene Batterie oder einen Akkumulator als Energieversorgung auf, wobei diese Energieversorgung wieder aufladbar oder auch nur auswechselbar sein kann.

Der Regaletikett-Client kann jedoch auch als elektronische Versorgung-Einrichtung ausgebildet sein, die an besagter Regalschiene installiert ist und dort zur elektrischen Versorgung von batterielosen Regaletiketten dient, die ebenfalls an der besagten Regalschiene befestigt sind. Auch diese Regaletiketten können die zuvor erwähnten Funktionalitäten aufweisen, allerdings stehen diese Funktionalitäten (mit Ausnahme der Visualisierung von Information mit einem extrem energiesparenden Bildschirm) nur während ihrer Energieversorgung durch die Versorgung-Einrichtung zur Verfügung. Die Versorgung-Einrichtung kann zum kontaktlosen Energie- und Kommunikations-Versorgen der Regaletiketten einer Regalschiene ausgebildet sein. Die Regaletiketten weisen ihrerseits eine entsprechende Ausbildung auf. Bevorzugt erfolgt die Versorgung durch induktive Kopplung einer Leiterschleife des Regaletiketts mit einer Leiterschleife der Regalschiene, die mit der Versorgung-Einrichtung elektrisch leitend verbunden ist. Besonders bevorzugt weisen zu diesem Zweck die Regaletiketten und die Versorgung-Einrichtung eine RFID oder NFC-Schnittstelle auf. RFID steht für Radio Frequency Identification und ein zutreffender Standard ist z.B. ISO/IEC 18000. NFC steht hier für Near Field Communication und die zutreffenden Standards sind z.B. ISO/IEC 13157, - 16353, -22536, -28361 usw.

Der Einsatz der genannten Technologien erlaubt vor allem die Realisierung des Regaletiketts, insbesondere als Regaletikettenanzeige ausgebildet, ohne eine eigene Energieversorgung wie beispielsweise eine Batterie oder einen Akkumulator, die beide relativ teuer sind. Auch muss ein konventionelles Regaletikett zwecks Wartung oder Erneuerung der Batterie oder des Akkumulators derart ausgebildet sein, dass diese Energiespeicher austauschbar sind. Gegebenenfalls kommt in dem hier zur Anwendung kommenden Regaletikett nur mehr ein Kondensator zur kurzfristigen, temporären Glättung bzw. Stabilisierung der internen Versorgungsspannung zur Anwendung. Das Regaletikett ist also derart ausgebildet, dass seine Elektronik zur Kommunikation oder zum Update des Bildschirminhalts oder zum Empfangen von Benutzerinteraktion oder zum Erfassen von Umgebungsparametern, insbesondere seine elektronische Steuerung, immer nur dann aktiv ist, wenn es mit Hilfe der externen elektronischen Versorgung-Einrichtung versorgt wird. Das Gehäuse kann vollständig und dauerhaft gekapselt sein, weil kein Austausch des Energiespeichers mehr nötig ist, so dass es sich nur mehr für Recyclingzwecke (z.B. mit Spezialwerkzeug) öffnen lässt.

Das Regaletikett lässt sich somit auf wenige, absolut benötigte (elektronische) Komponenten reduzieren und daher auch als extrem günstiges Regaletikett produzieren. Dieses extrem reduzierte Regaletikett braucht nur mehr über eine Basisfunktionalität zu verfügen, wie z.B. standardisierte NFC-Kommunikation mit standardisierter Energieversorgung während der NFC-Kommunikation, was mit Hilfe eines kommerziell erhältlichen NFC-Moduls realisiert ist. Updates des Bildschirms der energiesparenden Anzeigeeinheit und deren zugehörige Statusberichte werden nicht direkt von der Regaletikettenanzeige in einer Kommunikation mit einem Access-Point erledigt, so wie dies bei bekannten Systemen der Fall ist, sondern von der zwischengeschalteten Versorgung-Einrichtung abgewickelt, die ihrerseits über eine geeignete (und im Wesentlichen frei wählbare) Kommunikationsmethode mit dem Access-Point in Kontakt steht, worauf nachfolgend noch im Detail eingegangen ist. Gleiches gilt auf analoge Weise für die anderen erwähnten möglichen Funktionalitäten des Regaletiketts.

Weiterhin kann die Regalschiene zumindest eine an ihr ausgebildete Leiterschleife aufweisen, die mit ihren beiden Leitungsenden, nachfolgend Schleifen-Anschlüsse genannt, elektrisch leitend mit der NFC-Schnittstelle der Versorgung-Einrichtung verbunden ist. Die Leiterschleife ist dazu vorgesehen, die Energie zur elektrischen Versorgung eines Regaletiketts, das an der Regalschiene korrespondierend zu der Leiterschleife montiert ist, mit Hilfe der Leiterschleife kontaktlos an das Regaletikett zu übertragen. "Kontaktlos" bedeute hier, dass dies mit Hilfe einer induktiven Kopplung zwischen zwei benachbart lokalisierten Leiterschleifen bzw. Spulen erfolgt. So kann das Regaletikett als Bestandteil seiner NFC-Schnittstelle auch eine Leiterschleife bestehend aus einer einzigen Schleife oder einer Vielzahl von Windungen, also eine Spule, aufweisen. Weiterhin bedeutet "korrespondierend zu", dass das Regaletikett benachbart zu der durch die Leiterschleife aufgespannte Fläche positioniert ist und dort im Wesentlichen innerhalb einer durch die Leiterschleife begrenzten Zone lokalisiert ist. Die Leiterschleife selbst kann in der Ebene der Regalschiene, z.B. sichtbar, ausgebildet sein oder von einem schützenden Materialstreifen bedeckt sein. Wird das Regaletikett in die Regalschiene eingesetzt, so befindet sich die in dem Regaletikett verbaute Leiterschleife bzw. Spule automatisch in der für die induktive Kopplung zwischen den beiden nebeneinander positionierten Leiterschleifen bzw. Spulen nutzbaren Zone. Bevorzugt sind bei in die Regalschiene eingesetztem Regaletikett die durch die beiden Leiterschleifen bzw. Spulen (einerseits der Regalschiene angehörend und anderseits dem Regaletikett angehörend) aufgespannten Flächen parallel zueinander orientiert und im Abstand von weniger als einem Millimeter bis hin zu einigen Millimetern lokalisiert. Um die induktive Kopplung nicht zu behindern ist die Regalschiene selbst bevorzugt aus Kunststoff gefertigt.

Der Umfang der Leiterschleife der Regalschiene kann sich beispielsweise entlang der gesamten Länge der Regalschiene und der gesamten Höhe der Regalschiene erstrecken. Bevorzugt wird die durch die Leiterschleife aufgespannte Fläche jedoch etwas kleiner sein als die durch die physikalischen Dimensionen der Regalschiene definierte Fläche ihrer Vorderseite. Es kann die zumindest eine Leiterschleife innerhalb des Kanals der Regalschiene lokalisiert sein, in den die Regaletiketten eingesetzt werden, und dort in die Wand des Kanals integriert sein, die bei eingesetztem Regaletikett korrespondierend (benachbart) zu deren Rückwand verläuft. Zur Realisierung der Leiterschleife kann eine einzige umlaufende Leiterbahn oder eine spulenartig mehrfach umlaufende Leiterbahn, also eine mehrere Windungen aufweisende Leiterbahn, vorgesehen sein. Die Leiterschleife weist an ihren beiden Enden je einen Schleifen-Anschluss auf, an den die integrierte elektronische Schaltung der NFC-Schnittstelle angeschlossen ist. Die Leiterschleife kann jedoch auch an der Rückseite der Regalschiene lokalisiert sein.

Die Regalschiene kann mit einer einzigen Leiterschleife ausgestattet sein. Es hat sich jedoch als vorteilhaft erwiesen, wenn entlang der Längserstreckung der Regalschiene eine Mehrzahl von Leiterschleifen ausgebildet ist, von denen jede für sich mit der integrierten elektronischen Schaltung der NFC-Schnittstelle (wie erwähnt) gekoppelt ist. In dieser Konfiguration kann die NFC-Schnittstelle zur selektiven Energieübertragung mit Hilfe jeder der Leiterschleifen eingesetzt werden. Dies ermöglicht die wahlweise Energieversorgung für ein einziges Regaletikett oder eine Gruppe von Regaletiketten. Je nach Implementierung können entlang der Regalschiene beispielsweise 2, 3 oder bis zur 15 oder auch wesentlich mehr Leiterschleifen realisiert sein. Diese Leiterschleifen sind entlang der Längserstreckung der Regalschiene nebeneinander positioniert und ihre jeweils beiden Schleifen-Anschlüsse entlang der Regalschiene zu der Versorgung-Einrichtung hingeführt und dort mit ihr elektrisch leitend verbunden. Die Längserstreckung der durch die jeweilige Leiterschleife abgedeckten Zone an der Regalschiene kann für alle Leiterschleifen identisch sein. So können entlang der Regalschiene viele eng beieinander liegende Zonen definiert sein, deren jeweilige Längserstreckung sich an der Längserstreckung des an der Regalschiene zur Anwendung kommenden Regaletiketts orientiert, wobei die Längserstreckung üblicherweise einige cm aufweist, wie z.B. 8-12 cm. Dies ermöglicht die individuelle (selektive) induktive Kopplung mit jedem einzelnen Regaletikett an (beinahe) beliebigen Positionen entlang der Regalschiene. Dies ist dann von Vorteil, wenn die Positionierung des Regaletiketts möglichst flexibel erfolgen soll und trotzdem eine möglichst individuelle induktive Kopplung mit jedem Regaletikett möglich sein soll. Es können jedoch auch größere Zonen vorgesehen sein, in denen sich dann mehrere Regaletiketten befinden können, die dann gemeinsam mit der betroffenen Leiterschleife eine induktive Kopplung eingehen können. Diese Konfiguration kann dann zur Anwendung kommen, wenn die exakte Position des jeweiligen Regaletiketts keine Rolle spielt. Ein solcher Fall ist dann gegeben, wenn z.B. auf einem Regal über einen längeren Abschnitt oder die Gesamtlänge des Regals hinweg mehrere identische Produkte platziert sind und durch mehrere in größeren Abständen zueinander entlang der Längserstreckung der Regalschiene platzierte Regaletikettenanzeigen immer die gleiche Information zu diesen Produkten präsentiert wird. Entlang einer Regalschiene können jedoch auch gemischte Konfigurationen aus relativ kurzen Zonen und im Verhältnis dazu auch relativ langen Zonen vorliegen.

Die Leiterschleifen können alle gemeinsam, also gleichzeitig, zur Energieübertragung von der Versorgung-Einrichtung genutzt werden. Dies bedeutet jedoch für die Elektronik der Versorgung-Einrichtung ein entsprechend aufwändiges Design. Daher hat es sich als besonders vorteilhaft erwiesen, wenn die Versorgungeinheit zum Multiplexen der Energieübertragung über die Leiterschleifen ausgebildet ist. Es wird dabei immer nur eine einzige Leiterschleife, die elektronisch ausgewählt ist, zur Energieübertragung verwendet.

Die mindestens eine Leiterschleife ist also ein zur kontaktlosen Energieübertragung (wie auch zur kontaktlosen Kommunikation) bestimmter Bestandteil der NFC-Schnittstelle der Versorgung-Einrichtung.

Ganz allgemein ist hier festzustellen, dass die Leiterschleife somit eine Induktivität realisiert, die zur induktiven Kopplung mit der korrespondierenden Induktivität auf der Seite des Regaletiketts zum Einsatz kommt. Die Leiterschleife kann im Übrigen eine einzige Windung oder auch mehrere Windungen aufweisen.

Weiterhin kann die mindestens eine Leiterschleife in die Regalschiene integriert oder an ihr befestigt sein. Die Integration in die Regalschiene ist dann vorteilhaft, wenn die Regalschiene beispielsweise aus Kunststoff gefertigt ist und bereits beim z.B. Spritzgießen, also bei der Fertigung der Regalschiene, die Leiterschleife dort integriert wird. Die Leiterschleife kann jedoch auch auf der Oberfläche der Regalschiene, z.B. durch Aufkleben, befestigt werden. Insbesondere dann, wenn viele Leiterschleifen, die nebeneinander angeordnet sind, gefordert sind und dementsprechend auch viele Zuleitungen zu berücksichtigen sind, hat es sich als vorteilhaft erwiesen, wenn die Leiterschleife(n) auf einer Leiterplatte ausgebildet ist (sind). Diese Leiterplatte kann dann als eigener Bauteil in die Regalschiene integriert oder an ihr befestigt werden. Auch kann die Regalschiene derart ausgebildet sein, dass die Leiterplatte austauschbar ist, sodass leicht auf unterschiedlichste Anforderungsprofile in der Regalplanung mit unterschiedlichsten Leiterschleifenkonfigurationen, die z.B. auf einer einzigen Leiterplatte oder auch auf verschiedenen Leiterplatten realisiert sein können, reagiert werden kann. Besonders bevorzugt weist jedoch die Regalschiene selbst eine Leiterschleifen-Aufnahme auf. Diese kann so ausgebildet sein, dass sie z.B. an der Vorderseite der Regalschiene lokalisierst ist, also dort wo die Rückseite des Regaletiketts im an der Regalschiene befestigten Zustand möglichst nahe an der Regalschiene positioniert ist. Die Leiterschleifen-Aufnahme kann jedoch auch korrespondierend zu jenem Bereich der Regalschiene, wo das Regaletikett angebracht werden kann, an der Rückseite der Regalschiene verlaufen, was eine bessere Zugänglichkeit der Leiterschleife für Wartungszwecke mit sich bringen kann oder auch einen unübertrefflichen Schutz gegen Beschädigung sicherstellt. Letztendlich ist die Leiterschleife dort auch vor den Blicken der Kunden eines Supermarkts verborgen. Strukturell kann die Leiterschleifen-Aufnahme z.B. durch eine spaltförmige Vertiefung im z.B. Kunststoffmaterial der Regalschiene realisiert sein, in welche Vertiefung die Leiterschleife eingesetzt ist. Damit kann auch die Form der Leiterschleife wie auch ihre exakte Position möglichst präzise ohne weitere Maßnahmen (wie z.B. die zuvor erwähnte Leiterplatte und ihre Positionierung) definiert werden. Auch kann die rückseitig positionierte Leiterschleife praktisch an jedem beliebigen Punkt mit einer Elektronik der Versorgung-Einrichtung elektrisch leitend verbunden werden, ohne dass auf die Position der vorderseitig an der Regalschiene positionierten Regaletiketten Rücksicht genommen werden muss. Die Vertiefung kann auch einen Schnapp- bzw. Fixierungsmechanismus aufweisen, der die Leiterschleife in ihrer Sollposition fixiert. Auch kann die Vertiefung derart ausgebildet sein, dass sie eine Mehrzahl an Windungen der Leiterschleife aufnehmen kann, wobei diese nebeneinander und/oder übereinander in der Vertiefung angeordnet sein können.

Auch ist man bei der Integration einer Leiterschleifen-Aufnahme direkt in die Regalschiene (also in ihr Material) bei Planung bzw. Herstellung der Leiterschleife nicht an die Grenzen des Herstellungsprozesses für Leiterplatten gebunden und kann somit auch Leiterschleifen mit einer Länge realisieren, die jene für Leiterplatten von gegenwärtig ca. einem Meter bei weitem übertreffen. Es lässt sich somit durchaus auch eine Leiterschleife realisieren, die sich entlang einer gesamten Regalschiene erstreckt, die mehrere Meter lang sein kann.

Als besonders vorteilhaft hat es sich erweisen, wenn pro Regalschiene genau eine einzige elektronische Versorgung-Einrichtung zum Einsatz kommt. Dies erlaubt eine fokussierte Energieversorgung nur für diese eine Regalschiene zu realisieren.

In diesem Zusammenhang hat es sich weiterhin als besonders vorteilhaft erwiesen, wenn die elektronische Versorgung-Einrichtung in die Regalschiene integriert oder an ihr befestigt ist. Somit lässt sich eine Regalschiene mit individueller elektronischer Energieversorgung realisieren. Dabei kann die Versorgung-Einrichtung z.B. auch direkt an der Leiterplatte ausgebildet sein oder als Modul mit ihr verbunden sein oder als Modul mit der Regalschiene mechanisch gekoppelt sein und mit der Leiterschleife der Regalschiene elektrisch leitend verbunden sein. Dadurch kann die Regalschiene als Ganzes inklusive ihrer Versorgung-Einrichtung vertragen und an einem anderen Ort problemlos wieder in Betrieb genommen werden.

Besonders bevorzugt ist der Access-Point zum Übermitteln eines Dateninhalts an den Funk-Aufwecksender ausgebildet, wobei der Dateninhalt zur Adressierung eines Funk-Aufweckempfängers oder einer Gruppe von Funk-Aufweckempfängern dient, und wobei der Funk-Aufwecksender dazu ausgebildet ist, in dem Aufwecksignal oder zusätzlich bzw. zeitversetzt zu dem Aufwecksignal den Dateninhalt auszusenden, und wobei der Funk-Aufweckempfänger des zumindest einen Regaletikett-Clients zum Erkennen des Dateninhalts und zum Prüfen ausgebildet ist, ob er durch den Dateninhalt adressiert ist.

Der Dateninhalt wird bevorzugt nach dem Aussenden des Aufwecksignals im gleichen Frequenzband und dort im gleichen Kanal gesendet.

Der Funk-Aufweckempfänger, der das Aufwecksignal detektiert hat, versucht nachfolgend daran den Dateninhalt zu empfangen. Gelingt dies nicht lauscht er wieder auf ein neuerliches Auftreten des Aufwecksignals.

Erkennt der Funk-Aufweckempfänger einen Dateninhalt (z.B. in einem kurzen Zeitfenster nach dem Auftreten des Aufwecksignals), prüft er ob dieser Dateninhalt mit einer ihn eindeutig identifizierenden Kennung (digitale Nummer), die in ihm gespeichert ist, identisch ist. Wird auch diese Identität festgestellt, liegt eine Adressierung des Funk-Aufweckempfängers vor und der Funk-Aufweckempfänger veranlasst den Wechsel von dem Schlafmodus in den Aktivmodus. Wird die Identität nicht festgestellt, liegt keine Adressierung des Funk-Aufweckempfängers vor und der Funk-Aufweckempfänger verbleibt in der Empfangsbereitschaft für das nächste Auftreten des Aufwecksignal.

Mit dieser Maßnahme geht der Vorteil einher, dass nur ein durch Adressierung seines Funk-Aufwecksenders selektierter Regaletikett-Client von seinem energiesparenden Schlafmodus in seinen Aktivmodus wechselt, um sich an einer Funk-Kommunikation mit dem Access-Point zu beteiligen. Somit lässt sich sicherstellen, dass nicht eine unkontrolliert hohe Anzahl der Regaletikett-Clients einen Verbindungsaufbau herzustellen versucht. Durch das selektive Einleiten des Verbindungsaufbaus für nur bestimmte, durch den Access-Point vordefinierte Regaletikett-Clients wird eine optimale Systemperformance, wie Datendurchsatzrate und /oder Reaktionsgeschwindigkeit, des Funknetzwerkes sichergestellt, was bei einem willkürlichen Verbindungsaufbauszenario typischerweise nicht der Fall wäre. Gemäß dieser Maßnahme können individuelle Regaletikett-Clients oder auch Gruppen von Regaletikett-Clients, die verarbeitungstechnisch oder thematisch zusammengehören, aktiviert werden. Dies können beispielsweise alle Regaletikett-Clients, die Regaletiketten eines Regals bzw. einer Regalschiene sind, sein, um deren Funktionalitäten (z.B. Anzeige, Temperatursensor, Berührungssensor, usw.) zu nützen. Dies können auch solche Regaletikett-Clients sein, die Versorgung-Einrichtungen einer Regalschiene bilden, um die dort verfügbaren Funktionalitäten (z.B. Anzeige, Temperatursensor, Berührungssensor, usw.) der mit Hilfe der Versorgung-Einrichtung versorgten Regaletiketten zu nützen.

Die Adressierung einzelner Funk-Aufweckempfänger kann hierbei individuell auf Grundlage einer in ihnen gespeicherten individuellen und sie eindeutig identifizierenden Nummer erfolgen.

Zur Adressierung kann jeweils ein Paar aus Aufwecksignal und adressierendem Dateninhalt so oft ausgesandt werden, bis alle Funk-Aufweckempfänger der Gruppe adressiert wurden.

Die Adressierung kann jedoch auch so geschehen, dass nachfolgend an das Aussenden des Aufwecksignals eine der Gruppengröße entsprechende Anzahl der Dateninhalte als individuelle Adressen ausgesandt wird, bis alle Funk-Aufweckempfänger der Gruppe adressiert sind.

Die Adressierung kann jedoch auch so geschehen, dass eine Gruppe von Funk-Aufweckempfängern mit ein und derselben Nummer vorab programmiert wurde und dann bei Aussendung von nur einer einzigen Nummer als der Dateninhalt durch den Access-Point die Gruppe der Funk-Aufweckempfänger unmittelbar gruppenweise adressiert wird.

Besonders bevorzugt umfasst eine solche Gruppe eine Anzahl von 2 bis 20, bevorzugt von 5 bis 10, Funk-Aufweckempfänger. Bei der Definition der maximalen Anzahl der Gruppenteilnehmer, die gleichzeitig in eine Funk-Kommunikation mit dem Access-Point involviert sind, beachtet der Access-Point selbst, wie viele Gruppenteilnehmer er funktechnisch sinnvoll, also ohne eine signifikante Einbuße seiner Systemperformance auftreten zu lassen, zulassen kann. Der Access-Point kann dabei auch zwischen hoch priorisierten und niedrig priorisierten Funkaktivitäten unterscheiden und dementsprechend die Gruppengröße dynamisch anpassen. Typischerweise sind im Fall einer WLAN-Kommunikation im Idealfall maximal 10 Regaletikett-Clients im Aktivmodus und beteiligen sich an einer Funkkommunikation gemäß dem WLAN-Funkstandard mit dem Access-Point, der sie durch Adressierung der jeweils dort verbauten Funk-Aufwecksender selektiert hat.

Als besonders vorteilhaft hat es sich erwiesen, wenn der Access-Point zum Adressieren von jeweils einer Gruppe der Funk-Aufweckempfänger in aufeinanderfolgenden Zeitintervallen ausgebildet ist. Insbesondere diese Maßnahme erlaubt es einem Access-Point eine fast beliebige Anzahl von Regaletikett-Clients im Laufe der Zeit bedienen zu können, weil pro Zeitintervall immer nur eine beschränkte (möglichst kleine) Anzahl der Regaletiketten-Clients im Aktivmodus an der Kommunikation mit dem Access-Point gemäß dem Funkstandard teilnimmt. Durch Anpassung der Anzahl der im jeweiligen Zeitintervall aktiven Regaletikett-Clients kann auf optimale Weise auf die beim Access-Point vorliegende Leistungsfähigkeit bei der Kommunikation gemäß dem Funkstandard eingegangen werden. So kann ein einziger Access-Point die Fähigkeit erlangen, eine extrem hohe Gesamtzahl an Regaletiketten-Clients (z.B. 5.000 - 10.000 Stück bei ausreichender Funkreichweite des Access-Points) über eine Zeitspanne von z.B. 24 Stunden hinweg funktechnisch zu bedienen, wobei de facto pro Zeitintervall immer nur eine ausgewählte relativ kleine Gruppe (z.B. 10 Stück) der Regaletikett-Clients funktechnisch bedient wird. Stehen pro Zeitintervall z.B. 60 Sekunden für den Funkverkehr mit 10 Regaletikett-Clients zur Verfügung, lassen sich über einen ganzen Tag hinweg bis zu 14.400 Regaletikett-Clients von einem einzigen (z.B. WLAN) Access-Point versorgen. Dieser Wert ist nicht nur rechnerisch, sondern auch praktisch relevant, weil bei der Kommunikation gemäß dem Funkstandard pro Regaletikett-Client üblicherweise nur eine sehr geringe Datenmenge auftritt, die in wenigen Sekunden übermittelt bzw. mit dem Access-Point ausgetauscht wird.

Durch die Maßnahme der Aufteilung der Funkkommunikation mit der Gesamtheit der Regaletikett-Clients auf individuelle Zeitintervalle, in denen nur mit einer kleinen Gruppe der Regaletikett-Clients gemäß dem Funkstandard kommuniziert wird, wird ein inhärenter Nachteil bekannter Access-Points, nämlich nur eine relativ kleine Anzahl von Regaletikett-Clients im Rahmen einer Funk-Kommunikation gemäß einem Funkstandard gleichzeitig bedienen zu können, umgangen bzw. de facto auf vorteilhafte Weise genutzt. Mit dieser Maßnahme geht auch der Vorteil einher, dass sich die Anzahl der nötigen Access-Points in einem Geschäftslokal dramatisch reduzieren lässt, was auch zu einer einfacheren und letztendlich kostengünstigeren Funk-Infrastruktur führt.

Die erfindungsgemäßen Maßnahmen können im Zusammenhang mit zum Beispiel den Funkstandards ZigBee oder Bluetooth zur Anwendung kommen. Als besonders wirksam haben sich die erfindungsgemäßen Maßnahmen jedoch erwiesen, wenn als Funkstandard ein WLAN-Standard zur Anwendung kommt. Hier (wie grundsätzlich auch bei den zuvor erwähnten beiden anderen Standards) lässt sich durch geringe Änderungen des technischen Designs des Access-Points, nämlich die Aufnahme des Funk-Aufwecksenders wie auch die funktionale Fähigkeit der individuellen oder gruppenbasierten Adressierung der in den Regaletiketten-Clients verbauten Funk-Aufweckempfänger ein extrem leistungsfähiges Funknetzwerke realisieren, dessen Leistungsmerkmale (wie z.B. maximale Anzahl der erlaubten Clients, Datendurchsatz, usw.) konventionelle Lösungen bei weitem übertreffen. Ein solcher erfindungsgemäß modifizierter Access-Point kann auch ohne separaten Funk-Aufwecksender auskommen, und zwar dann, wenn zum Aussenden des Aufwecksignals und des Dateninhalts das Access-Point-Funkmodul verwendet wird, das sonst nur zur Funk-Kommunikation gemäß dem Funkstandard zum Einsatz kommt.

Auch auf der Seite des Regaletikett-Clients halten sich die technischen Maßnahmen zur Realisierung der Erfindung in einem überschaubaren Rahmen. So reicht es beispielsweise aus, dass der Funk-Aufweckempfänger dazu ausgebildet ist, bei erkannter Adressierung ein Aktivierungssignal zu generieren und an ein zur Funk-Kommunikation gemäß dem Funkstandard ausgebildetes Client-Funkmodul des Regaletikett-Clients abzugeben, wobei das Client-Funkmodul zum Empfang des Aktivierungssignals und als Folge des Auftretens des Aktivierungssignals zum Einnehmen seines Aktivmodus ausgebildet ist, in dem zunächst ein Funk-Verbindungsaufbau und danach eine Funk-Kommunikation mit dem Access-Point gemäß dem Funkstandard durchgeführt wird. Ein solches Aktivierungssignal kann beispielsweise durch ein Interrupt-Signal gegebenen sein, das einem Interrupt-Eingang der Elektronik des Client-Funkmoduls (z.B. einem Mikrocontroller des Client-Funkmoduls, der auch für andere Funktionalitäten des Regaletikett-Clients zuständig sein kann) zugeführt wird und bei dem Client-Funkmodul einen Interrupt, auslöst, sodass das Funk-Modul mit seiner gesamten Funktionalität aus dem Schlafmodus in den Aktivmodus hochfährt. Das Client-Funkmodul durchläuft im Aktivmodus einen Verbindungsaufbau und steht nach Verbindungsaufbau mit dem Access-Point zur Funk-Kommunikation gemäß dem Funkstandard zur Verfügung. Nach Erledigung aller inhaltlichen Aspekte, die im Rahmen der Funk-Kommunikation anfallen (z.B. Update des Bildschirms, Abfrage eines Status, Empfang einer Eingabe, Erfassung und Übermittlung eines Sensorsignals, usw.) kann das Client-Funkmodul z.B. nach Verstreichen einer kommunikationsfreien Zeitspanne oder durch Empfang eines die Funk-Kommunikation abschließenden Befehls, der von dem Access-Point im Rahmen der Funk-Kommunikation gemäß dem Funkstandard übermittelt wird, oder automatisch gegen Ende des Zeitintervalls, über dessen Länge der Regaletikett-Client (z.B. durch Programmierung) informiert ist, wieder in den Schlafmodus übergeführt werden.

Zusammengefasst erlauben die beschriebenen Maßnahmen, dass ein Access-Point, der zur Kommunikation gemäß einem Funk-Standard, wie z.B. Bluetooth, ZigBee oder besonders bevorzugt WLAN (insbesondere WiFi) mit den Regaletikett-Clients ausgebildet ist, mit Hilfe des adressierenden Aufwecksignals in fortlaufender Folge eine relativ kleine Gruppe der Regaletikett-Clients nach der anderen aufweckt und die Kommunikation gemäß dem Funk-Standard mit der aktiven Gruppe der Regaletikett-Clients abwickelt. Damit lässt sich eine fast beliebig große Anzahl (bis zu Zehn- oder sogar Dreißig-Tausend) der Regaletikett-Clients funktechnisch mit einem einzigen Access-Point versorgen, der eigentlich nur für die gleichzeitige funktechnische Versorgung der relativ kleinen Anzahl der in der jeweiligen Gruppe aktiven Regaletikett-Clients ausgelegt ist bzw. wegen des zur Anwendung kommenden Funkstandards nicht mehr Clients gleichzeitig versorgen kann.

Die Elektronik der verschiedenen Vorrichtungen des Systems wie auch deren Interface usw. kann mit Hilfe unterschiedlichster passiver wie auch aktiver elektronischer Bauteile auf diskrete wie auch integrierte Weise realisiert sein. Bevorzugt kommt dabei auch ein Mikroprozessor mit entsprechenden Peripheriebausteinen oder ein Mikrokontroller zum Einsatz, worauf eine Software zur Bereitstellung der verschiedenen Funktionalitäten abgearbeitet wird. Auch können sogenannte ASICs (Application-Specific Integrated Circuits) zur Anwendung kommen.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
- Fig. 1: ein Regaletiketten-System;
- Fig. 2-3: Systemkomponenten des Systems gemäß einem ersten Ausführungsbeispiel;
- Fig. 4-6: Systemkomponenten des Systems gemäß einem zweiten Ausführungsbeispiel;
- Fig. 7-9: Systemkomponenten des Systems gemäß einem dritten Ausführungsbeispiel;
- Fig. 10: einen Systemteil mit Systemkomponenten gemäß den Figuren 2-3;
- Fig. 11: eine Regalschiene mit integrierter Leiterschleife;
- Fig. 12: einen Systemteil mit Systemkomponenten gemäß den Figuren 4-6;
- Fig. 13: einen Systemteil mit Systemkomponenten gemäß den Figuren 7-9.

### Beschreibung der Ausführungsbeispiele

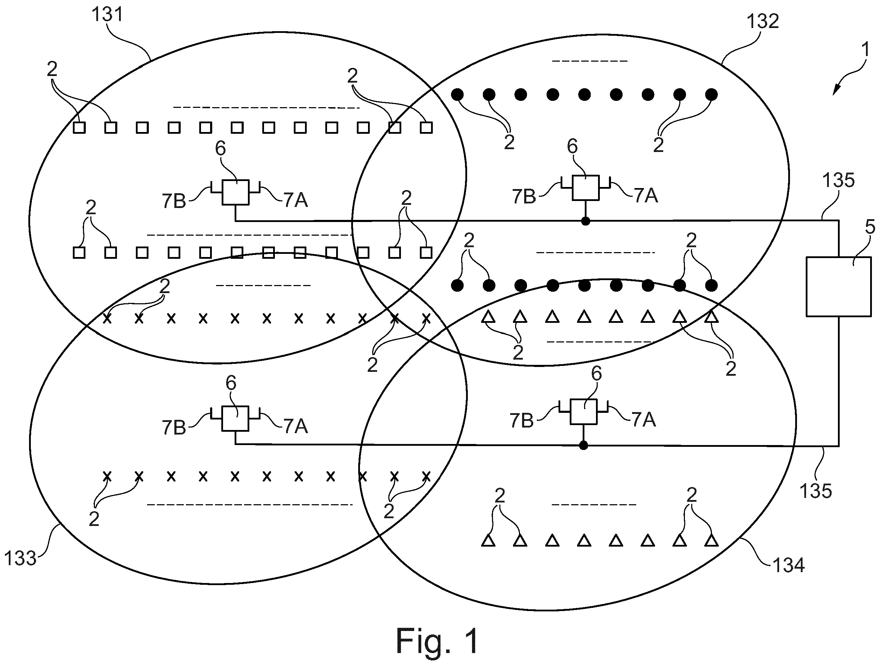

In der Figur 1 ist ein elektronisches Regaletiketten-System 1 dargestellt, das nachfolgend kurz System 1 genannt wird. Das System 1 weist 4000 Regaletikett-Clients 2, nachfolgend kurz Clients 2 genannt, und vier Access-Points 6 auf. Jeder Access-Point 6 hat eine individuelle Funkabdeckungszone 131 - 134, wobei sich die vier Funkabdeckungszonen 131 - 134 bereichsweise überlappen. Die Access-Points 6 wie auch die Clients 2 sind WLAN-fähig gemäß der Standard-Spezifikation IEEE 802.11b/g/n. Die Access-Points 6 verwenden für ihre Funk-Kommunikation das 2,4 GHz ISM-Funkband, wobei ISM-Funkband hier für "industrial, scientific and medical radio band" steht und jeder der Access-Points 6 einen anderen Funkkanal verwendet. Innerhalb der ersten Funkabdeckungszone 131 sind die 1000 Stück Clients 2 mit einem Quadrat symbolisiert und dem im Zentrum der ersten Funkabdeckungszone 131 visualisierten ersten Access-Point 6 über einen ersten Funkkanal zugeordnet. Innerhalb der zweiten Funkabdeckungszone 132 sind die 1000 Stück Clients 2 mit einem Kreis symbolisiert und dem im Zentrum der zweiten Funkabdeckungszone 132 visualisierten zweiten Access-Point 6 über einen zweiten Funkkanal zugeordnet. Innerhalb der dritten Funkabdeckungszone 133 sind die 1000 Stück Clients 2 mit einem Kreuz symbolisiert und dem im Zentrum der dritten Funkabdeckungszone 133 visualisierten dritten Access-Point 6 über einen dritten Funkkanal zugeordnet. Innerhalb der vierten Funkabdeckungszone 134 sind die 1000 Stück Clients 2 mit einem Dreieck symbolisiert und dem im Zentrum der vierten Funkabdeckungszone 134 visualisierten vierten Access-Point 6 über einen vierten Funkkanal zugeordnet. Im vorliegenden Fall sind pro Funkabdeckungszone 131 bis 134 von den jeweiligen Clients 2 geographisch nur die äußersten visualisiert, um die Figur 1 nicht zu überladen. Tatsächlich sei im vorliegenden Fall davon ausgegangen, dass sich zwischen diesen äußersten Clients 2 die verbleibenden nicht visualisierten Clients 2 befinden, welche die visualisierten Clients 2 auf die Gesamtanzahl von 1000 Stück pro Funkabdeckungszone 131 bis 134 ergänzen. Allerdings sei an dieser Stelle auch bemerket, dass jede Funkabdeckungszone auch eine individuelle Anzahl von Clients 2 aufweisen kann.

Die Access-Points 6 sind in einem Geschäftslokal (nicht dargestellt) eines Einzelhändlers oder Supermarkts typischerweise mit ausreichend Abstand zueinander an der Decke des Geschäftslokals befestigt, um die Funkabdeckungszonen 131 - 134 zu realisieren.

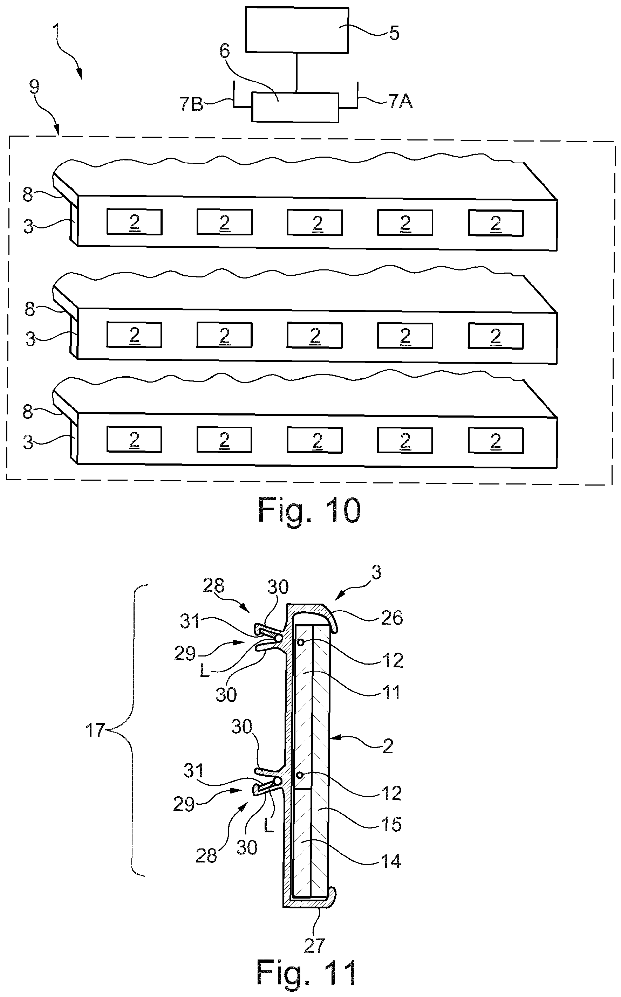

Wie in der Figur 10 ersichtlich, sind die Clients 2 an Regalen 9, genau genommen an Regalschienen 3, die den vorderen Abschluss von Regalböden 8 bilden, angebracht. Die Clients 2 dienen dort angebracht zur Anzeige von Produkt- und / oder Preisinformation für auf den Regalböden 8 präsentierte Produkte (nicht dargestellt).

In der Figur 1 ist weiterhin ersichtlich, dass die vier Access-Points 6 über Ethernet-Verkabelungen 135 mit einem Server 5 verbunden. Der Server 5 ist über die logische Verknüpfung der Produkte mit den Clients 2 informiert und speichert dies in seiner Datenbank, wo auch besagte Produkt- und / oder Preisinformation zu jedem Produkt gespeichert ist. Zudem kennt der Server 5 die Zuordnung zwischen den Clients 2 und den Access-Points 6 und kann daher die betreffende Produkt- und / oder Preisinformation zielgenau an den jeweiligen Client 2 übermitteln.

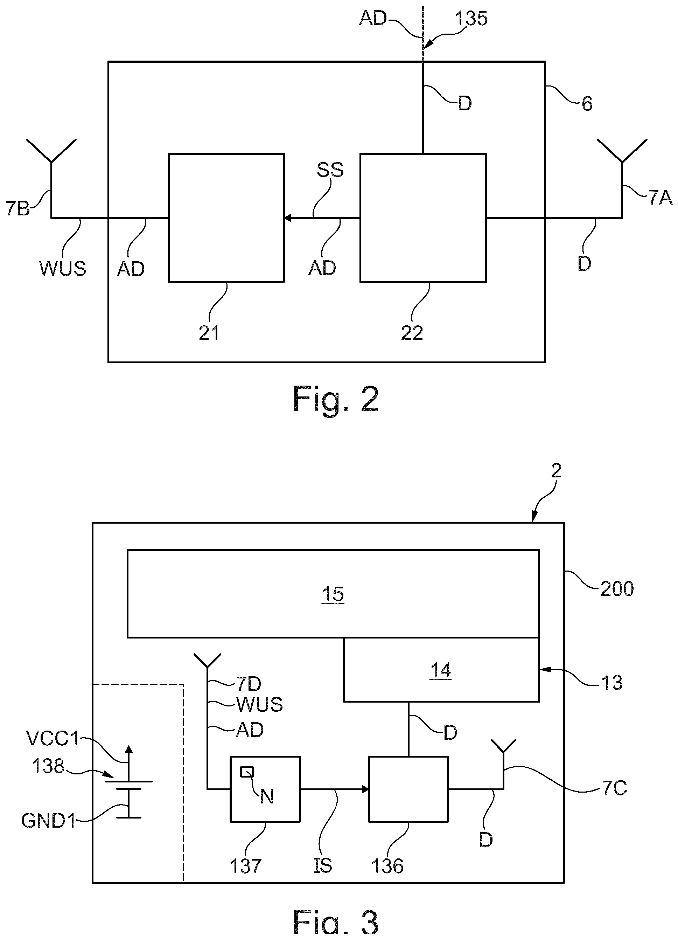

In weiterer Folge werden Details einer Ausbildungsform des Access-Points 6 und der Clients 2, also von Systemkomponenten des Systems 1, mithilfe der Figuren 2 und 3 erörtert.

In der Figur 2 ist ein grobes Blockschaltbild der Access-Points 6 visualisiert. Es zeigt ein WLAN-fähiges Access-Point-Funkmodul 22, das an eine erste Antennenkonfiguration 7A angeschlossen ist, und einen Funk-Aufwecksender 21, der an eine zweite Antennenkonfiguration 7B angeschlossen ist. Der Funk-Aufwecksender 21 ist dazu ausgebildet, ein Sende-Steuersignal SS von dem WLAN-Funkmodulen 22 zu empfangen, und darauffolgend ein Aufwecksignal WUS über die zweite Antennenkonfiguration 7B auszusenden. Der Access-Point 6 wird mit einem eigenen Netzgerät (nicht dargestellt) betrieben oder über die Ethernet-Verkabelung 135 mit Strom versorgt, was unter dem Begriff "power over ethernet" bekannt ist.

In der Figur 3 ist ein Blockschaltbild der Clients 2 visualisiert, die durch Regaletikettenanzeigen 200 realisiert sind. Jeder Client 2 weist eine Anzeigeeinheit 13, die sich in eine Bildschirm-Steuerung realisiert als Electronic-Paper-Display-Controller 14 und einen damit verbundenen und damit steuerbaren Bildschirm realisiert als Electronic-Paper-Display-Bildschirm 15 gliedert, auf. Weiterhin weist der Client 2 ein WLAN-fähiges Client-Funkmodul 136 auf, das mit einer dritten Antennenkonfiguration 7C verbunden ist. Über das Client-Funkmodul 136 werden Daten D von dem Access-Point 6 empfangen und mithilfe des Controllers 14 interpretiert und gegebenenfalls die Bildinhalte des Bildschirms 15 durch den Controller 14 entsprechend verändert. Ebenso können die Daten D Statusinformationen des Clients 2 repräsentieren, die über das Client-Funkmodul 136 an den Access-Point 6 abgegeben werden.

Der Client 2 weist einen energiesparenden Schlafmodus ohne Funk-Kommunikationsbereitschaft gemäß einem WLAN-Funkstandard und einen Aktivmodus mit Funk-Kommunikationsbereitschaft gemäß dem WLAN-Funkstandard auf.

Der Client 2 weist weiterhin einen Funk-Aufweckempfänger 137 auf, der mit einem relativ geringen, jedoch im Wesentlichen konstanten Strombedarf von typischerweise weniger als 3 µA auskommt und permanent im Betrieb ist, also während des Aktivmodus und auch während des Schlafmodus empfangsbereit zum Empfangen des Aufwecksignals WUS ist. Der Funk-Aufweckempfänger 137 scannt zu diesem Zweck einen voreingestellten Funkkanal in einem voreingestellten Frequenzband und prüft sein Empfangssignal auf das Vorliegen einer voreingestellten Signalfolge bzw. Signalstruktur, die das Aufwecksignal WUS charakterisiert, wobei der Funk-Aufwecksender 21 auch diese Voreinstellungen aufweist. Bei dem Client 2 sind während des Schlafmodus mit Ausnahme des Funk-Aufweckempfängers 137 alle Komponenten abgeschaltet bzw. angehalten.

Weiterhin speichert jeder Client 2 auf digitale Weise eine ihn eindeutig identifizierende Nummer N, mit deren Hilfe er auch eindeutig adressiert werden kann. Diese Nummer N kann unveränderbar vorgegeben sein oder auch durch den Server 5 programmierbar sein.

Der Client 2 weist weiterhin eine auswechselbare Batterie 138 auf, welche eine erste Versorgungsspannung VCC1 gegenüber einem ersten bezugspotential GND1 zur Stromversorgung des Clients 2 liefert.

Der Funk-Aufweckempfänger 137 ist dazu ausgebildet, das Aufwecksignal WUS zu empfangen und es zu erkennen. Sobald der Funk-Aufweckempfänger 137 das Aufwecksignal WUS erkennt, prüft er, ob darauffolgend Adressdaten AD empfangen werden, die der in ihm gespeicherten Nummer N entsprechen. Erst wenn diese Übereinstimmung, also der Umstand, dass er adressiert ist, festgestellt wird, gibt der Funk-Aufweckempfänger 137 ein Interrupt-Signal IS an das Client-Funkmoduls 136 ab, sodass dieses seinen Betrieb aufnimmt und infolge einen Funk-Verbindungsaufbau gemäß dem genannten WLAN-Funkstandard mit dem Access-Point 6 einleitet.

Der Server 5 ist jene Instanz im System 1, der auch über die Nummer N des in dem jeweiligen Client 2 verbauten Funk-Aufweckempfänger 137 informiert ist. Der Server 5 kennt also die Beziehung zwischen dem jeweiligen Funk-Aufweckempfänger 137 und dem jeweiligen Client 2 und speichert diese Beziehung in seiner Datenbank zusätzlich zu der Verbindung zwischen Produkt, Client 2 und Position des Clients 2 im Geschäftslokal. Grundsätzlich kann schon alleine die individuelle Nummer N des jeweiligen Funk-Aufweckempfängers 137 den jeweiligen Client 2 eindeutig identifizieren. An dieser Stelle sein jedoch auch erwähnt, dass jeder Client 2 als solches oder auch das jeweilige dort verbaute Client-Funkmodul 136 eine eigene zur eindeutigen Identifizierung geeignete zusätzliche Nummer speichern kann, wie z.B. eine MAC-Adresse (Media-Access-Control-Adresse).

Der Funk-Aufwecksender 21 des jeweiligen Access-Points 6 wird also über die Ethernet-Verkabelung 135 vom Server 5 aus mit den im Nachgang an die Aussendung des Aufwecksignals WUS zu überragenden Adressdaten AD versorgt. Dabei wird eine Kommunikationsanforderung vom Server 5 an das Access-Point-Funkmodul 22 übertragen, in der die Adressdaten AD und die zu übertragenden Daten D enthalten sind. Sobald das Access-Point-Funkmodul 22 zum Verbindungsaufbau mit dem gemäß der Adressdaten AD adressierten Client 2 bereit ist, wird das Sende-Steuersignal SS zusammen mit den Adressdaten AD an den Funk-Aufwecksender 21 abgegeben und der Funk-Aufwecksender 21 sendet das Aufwecksignal WUS und nachfolgend daran die Adressdaten AD. Nur jener Client 2, der das Aufwecksignal WUS empfängt und mit Hilfe der danach empfangenen Adressdaten AD seine Adressierung erkennt, startet die Funk-Kommunikationsbereitschaft des Client-Funkmoduls 136 des Clients 2, in dem er verbaut ist, wie vorangehend erörtert.

Nachfolgend sei mithilfe der Figur 10 die Funktionsweise des Systems 1 erörtert. Zur vereinfachten Veranschaulichung der Funktionsweise ist hier nur ein einzelner Access-Point 6 dargestellt, bei dem es sich zum Beispiel um jenen im Zentrum der ersten Funkabdeckungszone 131 handelt. Folglich sind die dargestellten Clients 2 jene, die innerhalb der ersten Funkabdeckungszone 131 als Quadrate visualisiert sind, wobei von den 1000 Stück lediglich 15 Stück gruppiert zu je fünf Stück an drei Regalschienen 3 eines einzigen Regals 9 dargestellt sind. Weiterhin sei angenommen, dass beim Server 5 ein Update aller Clients 2 dieses Regals 9, also der 15 Stück, nötig ist.

Um diesen Update-Prozess effizient im Rahmen des zur Verfügung stehenden Funkstandards (WLAN) durchzuführen, splittet der Server 5 den Update-Prozess in drei Teilprozesse, wobei jeweils die Clients 2 einer Regalschiene 3 gemeinsam innerhalb eines Zeitintervalls aktualisiert werden. Im vorliegenden Fall sollen gemäß dieses Update-Prozesses zunächst die Clients 2 der obersten Regalschiene 3 in einem ersten Zeitintervall, dann die Clients 2 der mittleren Regalschiene 3 in einem zweiten Zeitintervall und dann die Clients 2 der untersten Regalschiene 3 in einem dritten Zeitintervall aktualisiert werden. Jedes der drei Zeitintervalle erstreckt sich über im vorliegenden Fall 60 Sekunden. Die drei Zeitintervalle sind sequentiell direkt aufeinander folgend definiert.

Zu diesem Zweck werden zunächst zu Beginn des ersten Zeitintervalls die fünf Stück Adressdaten AD der in den Clients 2 der obersten Regalschiene 3 verbauten Funk-Aufweckempfänger 137 von dem Server 5 an den Access-Point 6 übermittelt. Gemeinsam dazu oder darauf nachfolgend werden die an den jeweiligen Client 2 bei einer Funk-Kommunikation gemäß dem WLAN-Standard zu übertragenden Daten D von dem Server 5 an den Access-Point 6 übermittelt und gespeichert. Das Access-Point-Funkmodul 22 ist somit bereit für die WLAN-Kommunikation mit den fünf Clients 2 der obersten Regalschiene 3 und startet die Aktivität des Funk-Aufwecksenders 21 mit dem Sende-Steuersignal SS, mit dem auch die fünf Stück Adressdaten AD an den Funk-Aufwecksender 21 übergeben werden.

Der Funk-Aufwecksender 21 sendet daraufhin entsprechend der Anzahl der übermittelten Adressdaten AD (im vorliegenden Fall sind dies fünf Stück) fünfmal hintereinander Paarweise zunächst das Aufwecksignal WUS und dann die Adressdaten AD des jeweiligen Funk-Aufweckempfängers 137, bis alle fünf Stück Funk-Aufweckempfänger 137 adressiert sind.

Beim jeweiligen Funk-Aufweckempfänger 137 wird zunächst das Aufwecksignal WUS erkannt und dann festgestellt, dass das Aufwecksignal WUS von Adressdaten AD gefolgt wird, die den jeweiligen Funk-Aufweckempfänger 137 adressieren. Die in den Clients 2 der obersten Regalschiene 3 verbauten Funk-Aufweckempfänger 137 erkennen auf Grundlage der Adressdaten AD, dass sie adressiert sind und aktivieren mit dem jeweiligen Interrupt-Signal IS das jeweilige Client-Funkmodul 136, das seinen Betrieb startet und eine Funkverbindung mit dem Access-Point 6 aufbaut, um in Folge die für den jeweiligen Client 2 bestimmten Daten D im Verlauf einer Funk-Kommunikation gemäß dem WLAN-Standard zu empfangen und im jeweiligen Client 2 zu verarbeiten.

Die in den Clients 2 der der mittleren und untersten Regalschiene 3 verbauten Funk-Aufweckempfänger 137 empfangen zwar das Aufwecksignal WUS, erkennen jedoch auf Grundlage der Adressdaten AD, dass sie nicht adressiert sind und setzen folglich keine weitere Aktivität.

Gegen Ende des ersten Zeitintervalls werden die WLAN-Funkverbindungen zwischen dem Access-Point 6 und den fünf Clients 2 der obersten Regalschiene 3 beendet, was z.B. durch Aussendung einer Statusmeldung durch den jeweiligen Client 2 und / oder durch einen Beendigungsbefehl ausgesandt durch den Access-Point 6 oder alleine deshalb, weil das erste Zeitintervall abläuft, was natürlich durch ein entsprechendes Timing im jeweiligen Client 2 dem betroffenen Client 2 bekannt sein muss, geschehen kann.

In weiterer Folge wird der vorangehend im ersten Zeitintervall für die Clients 2 der obersten Regalschiene 3 beschriebene Teilprozess mit angepassten Parametern (Adressdaten AD und Daten D) sequentiell für die an der mittleren Regalschiene 3 verbauten Clients 2 während des zweiten Zeitintervalls und dann für die an der untersten Regalschiene 3 verbauten Clients 2 während des dritten Zeitintervalls durchlaufen. Diese Methode stellt sicher, dass pro Zeitintervall die Gruppengröße der Clients 2 derart beschränkt ist, dass die WLAN-Funk-Kommunikation zuverlässig in dem Zeitintervall definierter Dauer erledigt wird, und zwar ohne dass Überlastungen des Access-Points 6 auftreten, die im ungünstigen Fall zu unerwünschtem Datenverlust oder einem Auslassen von Clients 2, also zu einem unvollständigen Kommunikations-Szenario führen können.

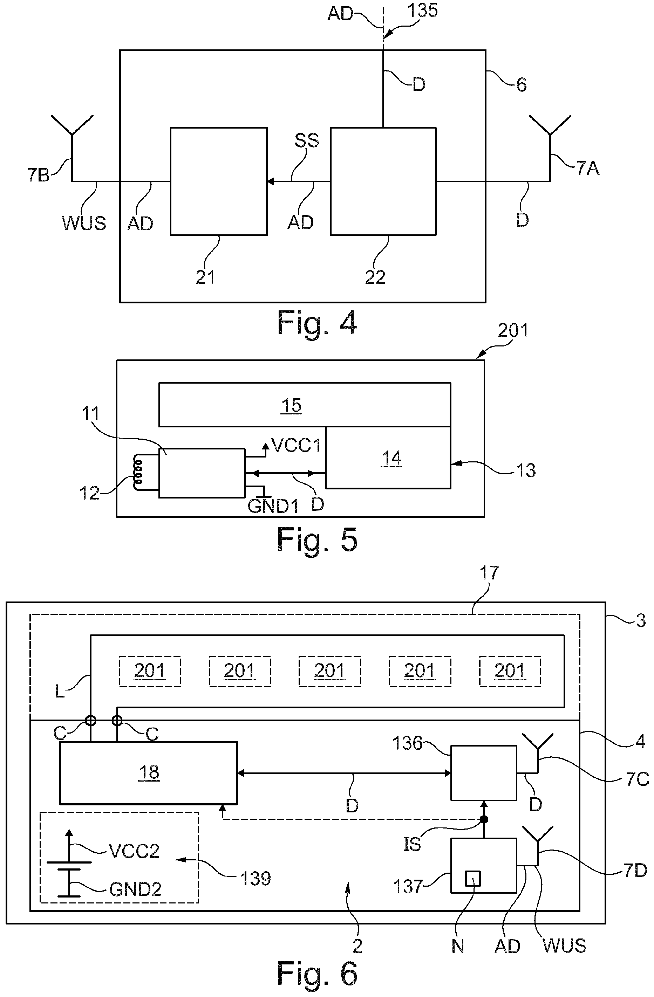

In weiterer Folge sind mit Hilfe der Figuren 4-6 die funktechnischen Systemkomponenten des Systems 1 gemäß einem zweiten Ausführungsbeispiel erörtert.

Dabei zeigt die Figur 4 den Access-Point 6 der im Vergleich zum ersten Ausführungsbeispiel des Systems 1 unverändert geblieben ist.

In der Figur 5 ist ein Blockschaltbild einer NFC-fähigen Regaletikettenanzeige 201 dargestellt, wobei NFC für "Near Field Communication" steht. Das Blockschaltbild zeigt eine erste NFC-Schnittstelle **11** mit ihrer Kopplungsspule 12. Mit Hilfe der Kopplungsspule 12 lässt sich eine induktive Kopplung mit einem anderen NFC-fähigen Gerät, im vorliegenden Fall einer Versorgung-Einrichtung 4, auf die im Detail in der Figur 6 eingegangen ist, etablieren. Konkret wird hierbei eine induktive Kopplung mit einer an der Regalschiene 3 ausgebildeten Leiterschleife L, etablieren (siehe dazu Figur 6 iVm. Figur 11), wenn die Kopplungsspule 12 entsprechend nahe an die Leiterschleife L herangebracht wird, was bei der an der Regalschienen 3 angebrachten Regaletikettenanzeige 201 der Fall ist. Während der induktiven Kopplung wird mit Hilfe der ersten NFC-Schnittstelle 11 die erste Versorgungsspannung VCC1 gegenüber dem ersten Bezugspotential GND1 für den Betrieb der gesamten Regaletikettenanzeige 201 generiert, was die Elektronik der Regaletikettenanzeige 201 aktiviert, so dass auch eine kontaktlose bidirektionale Kommunikation der Daten D über die erste NFC-Schnittstelle 11 durchführbar ist. Bestandteil dieser Elektronik ist auch ein NFC-Controller, der die gesamte NFC-Funktionalität bereitstellt, hier jedoch nicht im Detail dargestellt ist, jedoch in der ersten NFC-Schnittstelle 11 integriert ist.

Wie bereits im Zusammenhang mit der Figur 3 erörtert, zeigt das Blockschaltbild auch die mit der ersten NFC-Schnittstelle 11 verbundene Anzeigeeinheit 13, die sich in die Bildschirm-Steuerung realisiert als Electronic-Paper-Display-Controller 14 und den damit verbundenen und damit steuerbaren Bildschirm realisiert als der Electronic-Paper-Display-Bildschirm 15 gliedert. Mithilfe des Controllers 14 werden die empfangenen Daten D interpretiert, gegebenenfalls die Bildinhalte des Bildschirms 15 entsprechend verändert oder auch Statusinformationen in Form der Daten D über die NFC-Schnittstelle 11 an die Versorgung-Einrichtung 4 abgegeben.

Im Folgenden ist anhand der Figur 6 ein Blockschaltbild der erwähnten Regalschiene 3 mit integrierter Leiterschleife L, insbesondere auch der Versorgung-Einrichtung 4, erörtert. Im Unterschied zu dem mit Hilfe der Figuren 2 bis 3 erörterten Systemkomponenten des System 1 bildet nun nicht mehr die in der Figur 3 abgebildete Regaletikettenanzeige 200 sondern die in der Figur 6 dargestellte Versorgung-Einrichtung 4 den Client 2.

Die Versorgung-Einrichtung 4 ist einerseits zu ihrer eigenen kontaktlosen Versorgung mit Energie wie auch zur kontaktlosen Versorgung der Regaletikettenanzeigen 201 mit Energie ausgebildet. Zu ihrer eigenen Versorgung weist sie eine zweite (austauschbare) Batterie 139 auf, mit der eine zweite Versorgungsspannung VCC2 gegenüber einem zweiten Bezugspotential GND2 erzeugt wird.

In der Visualisierung der Figur 6 ist auch eine Trägerstruktur 17 angedeutet dargestellt. Die Trägerstruktur 17 trägt die Leiterschleifen L, die sich im Wesentlichen entlang der gesamten Läge der Regalschiene 3 erstreckt. Die Trägerstruktur 17 ist in der relativ flachen Struktur der Regalschiene 3 integriert. Die Versorgung-Einrichtung 4 kontaktiert die Leiterschleifen L elektrisch leitend über ihre Schleifen-Anschlüsse C.

Korrespondierend zu der Position der Leiterschleife L bzw. innerhalb der Leiterschleife L sind auch die jeweils dort positionierte Regaletikettenanzeige 201 angedeutet dargestellt. Hier ist auch die elektrische Verbindung der Schleifen-Anschlüsse C mit der Versorgung-Einrichtung 4, insbesondere jedoch mit der Elektronik ihrer (zweiten) NFC-Schnittstelle 18, konkret dargestellt. Die zweite NFC-Schnittstelle 18 ist bei Vorliegen einer induktiven Kopplung mit der ersten NFC-Schnittstelle 11 der Regaletikettenanzeige 201 zur kontaktlosen Übertragung von elektrischer Energie an die Regaletikettenanzeige 201 sowie zur bidirektionalen kontaktlosen Kommunikation der Daten D mit der durch Energieübertragung aktivierten Regaletikettenanzeige 201 ausgebildet.

Die Versorgung-Einrichtung 4 weist weiterhin das aus der Figur 3 bekannte WLAN-fähige Client-Funkmodul 136 auf, das - wie erörtert - zum funkbasierten kommunizieren gemäß dem WLAN-Funkstandard mit dem in der Figur 4 dargestellten Access-Point 6 ausgebildet ist und das mit der dritten Antennenkonfiguration 7C verbunden ist.

Die Versorgung-Einrichtung 4 weist weiterhin den aus der Figur 3 bekannten Funk-Aufweckempfänger 137 auf, wobei hinsichtlich Funktion und Wirkungsweise der Komponenten 136 und 137 auf die vorangehenden Erörterungen verweisen ist. Zur Vermeidung von Unklarheiten sei an dieser Stelle festgehalten, dass gemäß diesem Ausführungsbeispiel die Versorgung-Einrichtung 4 den energiesparenden Schlafmodus ohne Funk-Kommunikationsbereitschaft gemäß einem WLAN-Funkstandard und den Aktivmodus mit Funk-Kommunikationsbereitschaft gemäß dem WLAN-Funkstandard aufweist.

Im vorliegenden Fall sein noch erwähnt, dass mit Hilfe des Funk-Aufweckempfängers 137 auch die NFC-Schnittstelle 18 hinsichtlich des Schlaf- bzw. Aktivmodus beeinflussbar ist, was durch eine Leitung mit unterbrochener Linie zur Übertragung des Interrupt-Signals IS hin zur NFC-Schnittstelle 18 angedeutet ist. Es ist also auch die NFC-Schnittstelle 18 von besagtem Schlafmodus und Aktivmodus mitumfasst. Die Regaletikettenanzeigen 201 sind im Übrigen nur im Aktivmodus mit Energie versorgbar und daher auch nur in diesem Modus selbst aktiv.

Die Figur 11 zeigt in einer Querschnittsdarstellung die Regalschiene 3 mit einer Trägerstruktur 17 aufweisend eine Leiterschleifen-Aufnahme 28 an der Rückseite der Regalschiene 3, wobei die Leiterschleifen-Aufnahme 28 direkt aus dem Material der Regalschiene 3 (als aus dem Kunststoff) gefertigt ist. Die Leiterschleifen-Aufnahme 28 weist eine spaltförmige Vertiefung 29 auf, in welche ein Draht der Leiterschleife L unverrückbar eingelegt ist. Die spaltförmige Vertiefung 29 wird von zwei Wänden 30 flankiert, die derart dimensioniert sind, dass mit ihrer Hilfe ein Schnappmechanismus, der den Draht in seiner Sollposition fixiert, realisiert ist. Zu diesem Zweck ist auch ein band- oder streifenförmiges Material 31 (Band oder Materialstreifen) in die spaltförmige Vertiefung 29 eingesetzt, das einerseits den Draht der Leiterschleife L gegen den Boden der Vertiefung 29 presst und sich selbst andererseits an einem nasen- bzw. hakenartigem Ende von jeweils der äußeren Wand 30 abstützt bzw. dort einrastet.

Wie auch immer die Integration der Leiterschleife L in die Regalschiene 3 oder die Befestigung der Leiterschleife L an der Regalschiene 3 realisiert ist, hat es sich weiterhin als besonders vorteilhaft erwiesen, dass die elektronische Versorgung-Einrichtung 4 in die Regalschiene 3 integriert oder an ihr befestigt ist. Somit lässt sich eine Regalschiene 3 mit individueller elektrischer Energieversorgung realisieren. Dabei kann die Versorgung-Einrichtung 4 z.B. auch direkt an der Trägerstruktur 17 ausgebildet sein oder als Modul mit ihr verbunden sein oder als Modul mit der Regalschiene 3 mechanisch gekoppelt sein und mit der Leiterschleife L der Regalschiene 3 elektrisch leitend verbunden sein. Dadurch kann die Regalschiene 3 als Ganzes inklusive ihrer Versorgung-Einrichtung 4 vertragen und an einem anderen Ort problemlos wieder in Betrieb genommen werden.

In der Figur 11 wurde auf die Darstellung eines Befestigungsmechanismus für die Regalschiene 3, der die Befestigung der Regalschiene 3 an einer anderen Struktur, wie z.B. dem Regalboden 8 erlaubt, verzichtet, weil dieses Detail nicht die Erfindung betrifft und auf vielfältige dem Fachmann zugängliche Art und Weise realisierbar ist.

Die Regalschiene 3 ist ebenso wie die Regaletikettenanzeige 200, die den Client 2 realisiert, derart ausgebildete, dass die Regaletikettenanzeige 200 von vorne in die Regalschiene 3 eingesetzt werden kann und dabei über einen Schnappmechanismus derart mit ihr verriegelt, dass sie nur mit erheblichem Kraftaufwand wieder von der Regalschiene 3 entfernt werden kann. Dies ist beispielsweise mit einer oberen Führungsleiste 26 und einer unteren Führungsleiste 27 der Regalschiene 3 realisierbar, wobei sich zumindest eine der beiden Führungsleisten 26 oder 27, gegebenenfalls auch beide, beim Einsetzen bzw. Herausnehmen des Regaletikettenanzeige 200 leicht verbiegen lassen. Zugleich erlaubt der erwähnte Mechanismus, dass die Regaletikettenanzeige 200 entlang der Regalschiene 3 mit im Verhältnis dazu nur geringem Kraftaufwand verschoben und folglich leicht an beliebiger Position platziert werden kann.

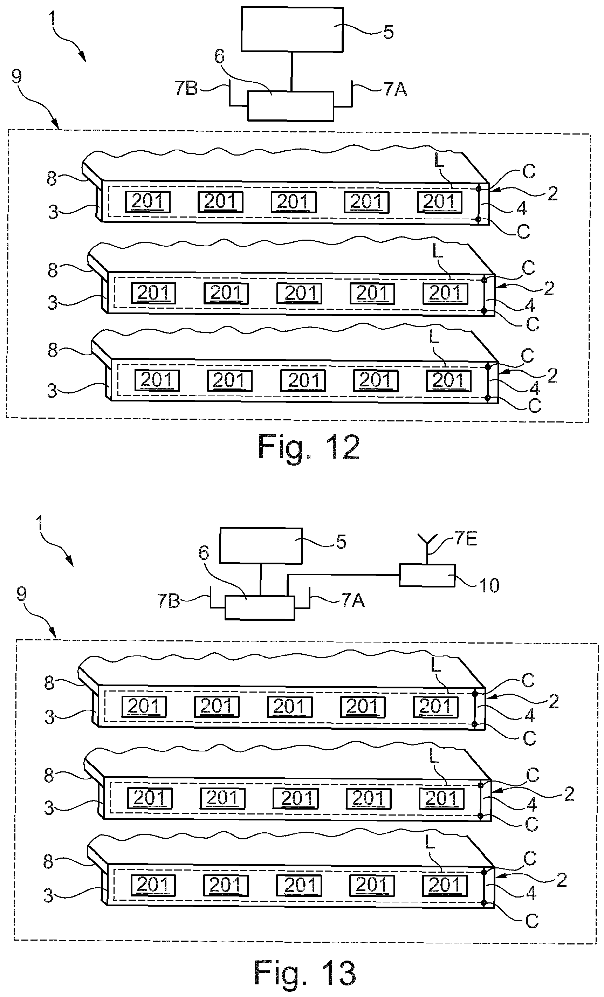

In weiterer Folge ist auf die Figur 12 zur Erörterung der Funktionsweise des Systems 1 mit seinen Systemkomponenten gemäß der zweiten Ausbildungsform verwiesen. Ähnlich wie im Betrieb des Systems 1 gemäß der Figur 10 werden beim Betrieb des Systems 1 gemäß der Figur 12 Gruppen von Clients 2 in einem Zeitintervall vom Schlafmodus in den Aktivmodus übergeführt, um dann gemäß dem WLAN-Funkstandard mit dem Access-Point 6 zu kommunizieren. Im vorliegenden Fall ist diese Gruppe der Clients 2 durch die an dem Regal 9 installierten drei Stück der Versorgung-Einrichtungen 4 gegeben. Sobald die drei Versorgung-Einrichtungen 4 in ihrem Aktivmodus sind, empfangen sie die für die jeweilige Regaletikettenanzeige 201 bestimmten Daten D, aktivieren die Regaletikettenanzeigen 201 mithilfe ihrer NFC-Schnittstelle 18 und versorgen dabei die Regaletikettenanzeigen 201 mit elektrischer Energie und übermitteln die für die Regaletikettenanzeigen 201 bestimmten Daten D an diese. Danach wechseln die drei Versorgung-Einrichtungen 4 wieder in ihren Schlafmodus. In weiterer Folge können auf analoge Weise andere Gruppen der Clients 2 in nachfolgenden Zeitintervallen zusammengefasst aktiviert werden und somit sequenziell im jeweiligen Zeitintervall mit dem Access-Point 6 eine WLAN-Funkkommunikation durchführen. Im vorliegenden Fall lassen sich noch mehr Regaletikettenanzeigen 201 funktechnisch bedienen, weil in jeder pro Zeitintervall adressierten Gruppe der Versorgung-Einrichtungen 4 jede Versorgung-Einrichtung 4 als Client 2 für sich genommen wieder eine Gruppe der Regaletikettenanzeigen 201 versorgt.

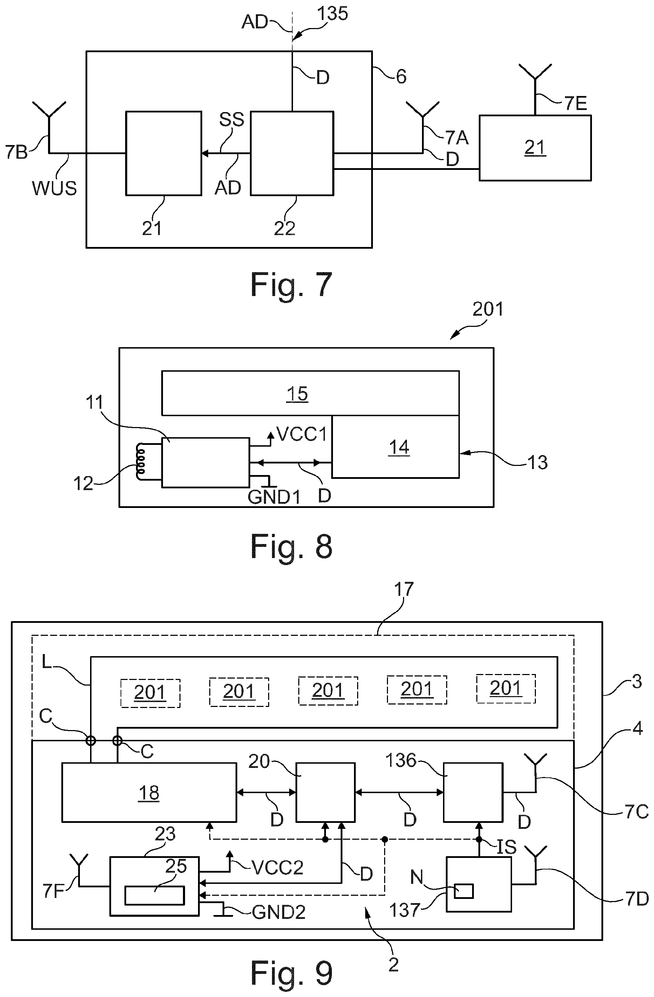

In weiterer Folge sind mit Hilfe der Figuren 7-9 die funktechnischen Systemkomponenten des Systems 1 gemäß einem dritten Ausführungsbeispiel erörtert. In diesem System 1 ist es möglich, die als Client 2 fungierende Versorgung-Einrichtung 4 kontaktlos, also über Funk, mit elektrischer Energie zu versorgen. Dabei kommt eine Technologie zum Einsatz, die unter dem Begriff "Power over WiFi" bekannt ist.

Zu diesem Zweck ist der Access-Point 6 mit einem Versorgungssender 10 gekoppelt, der zur Aussendung von gerichteten Funksignalen zwecks Übertragung der Energie ausgebildet ist. Der Versorgungssender 10 weist neben seiner Elektronik (nicht im Detail dargestellt) eine Antennenkonfiguration 7E (die eine Anzahl von Einzelantenne umfasst) auf, mit deren Hilfe die Richtung der Energieübertragung (letztendlich die gerichtete Ausbreitung des Funksignals, das mit z.B. 5 Watt ausgesandt wird) relativ genau einstellbar ist, sodass die zu übertragene Energie präzise bei einer selektierten Versorgung-Einrichtung 4 ankommt.

Die in der Figur 8 visualisierte Regaletikettenanzeige 201 entspricht genau jener der Figur 5 und wurde bereits im Zusammenhang mit der Figur 5 im Detail erörtert.

In der Figur 9 ist die im Vergleich zu der Figur 6 modifizierte Versorgung-Einrichtung 4 dargestellt. Die Versorgung-Einrichtung 4 ist einerseits zu ihrer eigenen kontaktlosen Versorgung mit Energie wie auch zur kontaktlosen Versorgung der Regaletikettenanzeigen 201 mit Energie ausgebildet. Zu ihrer eigenen Versorgung weist sie einen zum Empfangen der zuvor erörterten energieübertragenden Funksignale geeigneten Versorgungsempfänger 23 auf, der mit einer Antennenkonfiguration 7F (die mehrere Antennen aufweisen kann) und einer Elektronik (nicht im Detail dargestellt) ausgerüstet ist, die dazu ausgebildet ist, das energieübertragende Funksignal zu empfangen und die damit übertragene Energie in einem internen elektrischen Energiespeicher 25 (aufladbaren Batterie, Akkumulator) zu speichern und die zweite Versorgungsspannung VCC2 gegenüber einem zweiten Bezugspotential GND2 zu generieren.

Ein für die gegenständliche Erörterung benötigter Ausschnitt des Systems 1 gemäß der dritten Ausbildungsform ist in der Figur 13 visualisiert.

Auf die Funktion und Wirkungsweise des Funk-Aufweckempfängers 137 wird an dieser Stelle auf die vorangehenden Erörterungen gemäß der Figur 9 verwiesen. Im vorliegenden Zusammenhang sei jedoch ergänzt, dass zusätzlich zu den aktiven Komponenten 18 und 136 ggf. auch eine Steuereinheit 20 und der Versorgungsempfänger 23 hinsichtlich des Schlaf- bzw. Aktivmodus durch den Funk-Aufwecksender steuerbar sein können, was durch eine unterbrochen dargestellte Leitung, welche das Interrupt-Signal IS zu diesen Komponente 18, 20 und 23 leitet, angedeutet ist. Es ist also auch die Steuereinheit 20, ggf. auch der Versorgungsempfänger 23 von besagtem Schlafmodus und Aktivmodus mitumfasst. Auch hier ist die Regaletikettenanzeige 201 im Übrigen nur im Aktivmodus mit Energie versorgbar und daher auch nur in diesem Modus selbst aktiv.

Im Betrieb, also im Aktivmodus, kann die Versorgung-Einrichtung 4 beispielsweise mit Hilfe der Steuereinheit 20 den Ladezustand des Energiespeichers 25 abfragen bzw. überwachen. Sobald der Ladezustand unter ein bestimmtes Niveau sinkt, kann die Steuereinheit 20 mit Hilfe der WLAN-Funkkommunikation eine (Neu-)Aufladung anfordern. Diese Anforderung wird von dem Access-Point 6 empfangen, dem die Versorgung-Einrichtung 4 logisch (funktechnisch) zugeordnet ist. Da im System 1 (z.B. mit Hilfe des Servers 5) die genaue geographische Position (die dreidimensionalen Koordinaten) jeder der Versorgung-Einrichtungen 4 sowie ihre eindeutige Kennung bekannt ist, kann der mit dem betroffenen Access-Point 6 gekoppelte Versorgungssender 10 das energieübertragende Funksignal präzise gerichtet hin zur Position der jeweiligen das Aufladen anfordernden Versorgung-Einrichtung 4 aussenden. Dort wird das energieübertragende Funksignal empfangen und die mit seiner Hilfe übertragene Energie zur Aufladung des dortigen internen Energiespeichers 25 verwendet bzw. genutzt.

Auch kann die gerichtete Energieübertragung systematisch, also jeweils dann erfolgen, wenn die Versorgung-Einrichtung 4 gerade im Aktivmodus ist. Es ist also kein explizites Abfragen des Ladezustands und ein Abrufen der Energieversorgung während der WLAN-Funkkommunikation im jeweiligen Zeitintervall nötig, was zur Systemeffizienz beitragen kann.

An dieser Stelle sei noch erwähnt, dass die Access-Points 6 wie auch die Clients 2 UWB-fähige Funkmodule (UWB steht hier "ultra wide band") aufweisen können, mit deren Hilfe in einem Suchmodus des Systems 1 durch Kooperation der Access-Points 6 (koordinierte UWB-Funk-Kommunikation eines Clients 2 mit einer Vielzahl der Access-Points 6) die Position der einzelnen Clients 2 relativ genau feststellbar ist.

Weiterhin sei erwähnt, dass der Access-Point 6 keinen integrierten Funk-Aufwecksender 21 enthalten muss. Der Access-Point 6 kann auch eine Datenschnittstelle, wie z.B. einen USB-Anschluss (Buchse) mit USB-Interface enthalten und zum Ansteuern eines externen Funk-Aufwecksenders 21 ausgebildet sein, wobei in diesem Fall das Sende-Steuersignal SS und der Dateninhalt AD über die Datenschnittstelle, an die der externe Funk-Aufwecksender 21 angeschlossen ist, an den externen Funk-Aufwecksender 21 abgegeben werden. Im Fall der USB-Implementierung kann der Funk-Aufwecksender 21 seinerseits einen USB-Anschluss (Stecker) mit USB-Interface aufweisen und formähnlich einem USB-Stick ausgebildet sein.

Weiterhin kann das System 1 auch so aufgebaut sein, dass als Primär-Access-Point, der die Kommunikation mit dem Server 5 abwickelt, ein konventioneller Standard-Access-Point zum Einsatz kommt. Dieser Standard-Access-Point kommuniziert gemäß einem Funkstandard, hier z.B. WLAN, mit dem erfindungsgemäßen Access-Point 6, der hier die Rolle eines Gateways oder einer Relaisstation übernimmt. Mit Hilfe des Funk-Aufwecksenders 21 wird auch in diesem System 1 der Client 2, der wie bereits erwähnt ausgebildet sein kann, von seinem Schlafmodus in seinen Aktivmodus übergeführt. Im vorliegenden Fall initiiert das Client-Funkmodul 136 allerdings keine standardkonforme Kommunikation mit dem Access-Point 6 sondern führt den Verbindungsaufbau und die nachfolgende WLAN-Kommunikation direkt mit dem Standard-Access-Point durch. In diesem System 1 ist es auch möglich, dass z.B. für den Client 2 bestimmte Bildinhalte mit Hilfe des Funk-Aufwecksenders 21 an den adressierten Funk-Aufweckempfänger 137 übertragen werden. Dies geschieht zwar relativ langsam aber dafür extrem energiesparend.

Damit lässt sich das System 1 so gestalten, dass in größeren Abständen zueinander die Standard-Access-Points in einem Geschäftslokal installiert sind und in kleineren Abständen zwischen ihnen die Access-Points 6 als Relaisstationen installiert sind. Wie erwähnt stehen die Standard-Access-Points mit den Access-Points 6 über WLAN-Kommunikation in Verbindung und die Access-Points 6 steuern die Clients 2 je nach Anforderung vom Server 5 an. Dies kann die Übermittlung von Bildinhalten für die Anzeigeeinrichtung der Clients 2 betreffen oder die Aufforderung, dass sich ausgewählte Clients 2 mittels WLAN-Kommunikation entweder mit einem der Access-Points 6 verbinden oder eine WLAN-Verbindung zu einem der Standard-Access-Point herstellen.

Abschließend sei noch erwähnt, dass in dem System 1 auch eine Fernbedienung zum Einsatz kommen kann, die hinsichtlich ihres Funksystems die Ausbildung des Access-Points 6 aufweist, also das WLAN-fähige Access-Point-Funkmodul 22 und den Funk-Aufwecksender 21 aufweisen kann. Diese Fernbedienung kann über WLAN (z.B. unter Ausnutzung eines der Access-Points 6 oder eines anderen Standard-Access-Points) mit dem Server 5 verbunden sein. Soll nun ein bestimmter Client 2 oder eine Gruppe solcher Clients 2 ferngesteuert werden, kann mit Hilfe des in der Fernsteuerung verbauten Funk-Aufwecksenders 21 ein adressiertes Aufwecken des oder der betroffenen Clients 2 erfolgen, was zu einer raschen Erledigung der Fernsteuerungsaufgaben beiträgt.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Elektronisches Regaletiketten-System (1), das aufweist:
zumindest einen batteriebetriebenen Regaletikett-Client (2), der einen energiesparenden Schlafmodus ohne Funk-Kommunikationsbereitschaft gemäß einem Funkstandard und einen Aktivmodus mit Funk-Kommunikationsbereitschaft gemäß dem Funkstandard aufweist und der einen Funk-Aufweckempfänger (137) aufweist, der dazu ausgebildet ist, bei einem Empfangen eines Aufwecksignals das Verlassen des Schlafmodus und das Einnehmen des Aktivmodus zu veranlassen, und
einen Access-Point (6), der zur Funk-Kommunikation gemäß dem Funkstandard mit dem zumindest einen Regaletikett-Client (2) ausgebildet ist und der einen Funk-Aufwecksender (21) zum Aussenden des Aufwecksignals aufweist, wobei der Funk-Aufwecksender (21) hinsichtlich des Zeitpunkts des Aussendens des Aufwecksignals durch den Access-Point (6) steuerbar ausgebildet ist und der Access-Point (6) den Zeitpunkt als Einleitung eines Funk-Verbindungsaufbaus gemäß dem Funkstandard für den zumindest einen Regaletikett-Client (2), insbesondere mit Vorlaufzeit für den Wechsel vom Schlafmodus in den Aktivmodus, definiert,
wobei der Access-Point (6) zum Übermitteln eines Dateninhalts an den Funk-Aufwecksender (21) ausgebildet ist, wobei der Dateninhalt zur Adressierung einer Gruppe von Funk-Aufweckempfängern (137) dient, und
wobei der Funk-Aufwecksender (21) dazu ausgebildet ist, in dem Aufwecksignal oder zusätzlich bzw. zeitversetzt zu dem Aufwecksignal den Dateninhalt auszusenden, und
wobei der Funk-Aufweckempfänger (137) des zumindest einen Regaletikett-Clients (2) zum Erkennen des Dateninhalts und zum Prüfen ausgebildet ist, ob er durch den Dateninhalt adressiert ist,
**dadurch gekennzeichnet, dass**
der Access-Point (6) zum Adressieren von jeweils einer Gruppe von Funk-Aufweckempfängern (137) in aufeinanderfolgenden Zeitintervallen ausgebildet ist, und dass
der Access-Point (6) dazu ausgebildet ist, zwischen hoch priorisierter und niedrig priorisierter Funk-Kommunikation zu unterscheiden und dementsprechend die Größe einer Gruppe von Funk-Aufweckempfängern (137) dynamisch anzupassen.

2. System (1) nach Anspruch 1, wobei eine solche Gruppe eine Anzahl von 2 bis 20, bevorzugt von 5 bis 10, Funk-Aufweckempfänger (137) umfasst.

3. System (1) nach einem der Ansprüche 1 oder 2, wobei der Funk-Aufweckempfänger (137) dazu ausgebildet ist, bei erkannter Adressierung ein Aktivierungssignal zu generieren und an ein zur Funk-Kommunikation gemäß dem Funkstandard ausgebildetes Client-Funk-Modul (136) des Regaletikett-Clients (2) abzugeben, wobei das Client-Funk-Modul (136) als Folge des Auftretens des Aktivierungssignals zum Einnehmen seines Aktivmodus ausgebildet ist, in dem zunächst ein Funk-Verbindungsaufbau und danach eine Funk-Kommunikation mit dem Access-Point (6) gemäß dem Funkstandard durchführbar ist.

4. System (1) nach einem der vorangehenden Ansprüche, wobei der Funkstandard ein WLAN-Standard ist.

5. System (1) nach einem der vorangehenden Ansprüche, wobei der Funk-Aufweckempfänger (137) permanent in Empfangsbereitschaft ist.

6. System (1) nach einem der vorangehenden Ansprüche, wobei der Funk-Aufweckempfänger (137) eine Stromaufnahme von weniger als 3 µA bei einer Versorgungsspannung von 1,8 Volt und einer Datenrate von 1 kBit/s aufweist.

7. System (1) nach einem der vorangehenden Ansprüche, wobei der Regaletikett-Client (2) ein elektronisches Regaletikett (200), bevorzugt mit einer Anzeigeeinheit (13), realisiert.

8. System (1) nach einem der vorangehenden Ansprüche, wobei der Regaletikett-Client (2) eine elektronische Versorgung-Einrichtung (4) zur kontaktlosen Energieversorgung eines batterielosen elektronischen Regaletikettes (201) realisiert.

9. Verfahren zum Betreiben eines elektronischen Regaletiketten-Systems, (1)
wobei das System (1) zumindest einen batteriebetriebenen Regaletikett-Client (2) aufweist, der einen energiesparenden Schlafmodus ohne Funk-Kommunikationsbereitschaft gemäß einem Funkstandard und einen Aktivmodus mit Funk-Kommunikationsbereitschaft gemäß dem Funkstandard aufweist, und wobei das System (1) weiterhin einen Access-Point (6) aufweist, der zur Funk-Kommunikation gemäß dem Funkstandard mit dem zumindest einen Regaletikett-Client (2) ausgebildet ist,
wobei gemäß dem Verfahren unter Steuerung des Access-Points (6) mit Hilfe eines Funk-Aufwecksenders (21) des Access-Points (6) ein Aufwecksignal zu jenem Zeitpunkt ausgesandt wird, zu dem bei dem zumindest einen Regaletikett-Client (2) ein Funk-Verbindungsaufbau gemäß dem Funkstandard einzuleiten ist, insbesondere mit ausreichend Vorlaufzeit für einen Wechsel von dem Schlafmodus in den Aktivmodus, und
wobei bei dem Regaletikett-Client (2) das Aufwecksignal mit Hilfe eines Funk-Aufweckempfängers (137) empfangen wird und der Schlafmodus verlassen und der Aktivmodus eingenommen wird, wobei
der Access-Point (6) einen Dateninhalt an den Funk-Aufwecksender (21) übermittelt, wobei der Dateninhalt zur Adressierung einer Gruppe von Funk-Aufweckempfängern (137) dient, und
der Funk-Aufwecksender (21) den Dateninhalt in dem Aufwecksignal oder zusätzlich zu dem Aufwecksignal aussendet, und
der Funk-Aufweckempfänger (137) des Regaletikett-Clients (2) den Dateninhalt erkennt und prüft, ob er durch den Dateninhalt adressiert ist **dadurch gekennzeichnet, dass**
der Access-Point (6) in aufeinanderfolgenden Zeitintervallen jeweils eine Gruppe von Funk-Aufweckempfängern (137) adressiert und dazu ausgebildet ist, zwischen hoch priorisierter und niedrig priorisierter Funk-Kommunikation zu unterscheiden und dementsprechend die Größe einer Gruppe von Funk-Aufweckempfängern (137) dynamisch anzupassen.

10. Verfahren nach Anspruch 9, wobei als Funkstandard ein WLAN-Standard verwendet wird.

## Claims

1. Electronic shelf label system (1) comprising:
at least one battery-operated shelf label client (2), which comprises an energy-saving sleep mode without radio communication readiness according to a radio standard and an active mode with radio communication readiness according to the radio standard, and which comprises a radio wake-up receiver (137) that is designed to prompt the sleep mode to be exited and the active mode to be adopted when a wake-up signal is received, and
an access point (6) that is designed for radio communication according to the radio standard with the at least one shelf label client (2) and which comprises a radio wake-up transmitter (21) for transmitting the wake-up signal, wherein the radio wake-up transmitter (21) is designed to be controllable with regard to the time at which the wake-up signal is transmitted by the access point (6), and the access point (6) defines the time as the initiation of a radio connection setup according to the radio standard for the at least one shelf label client (2), in particular with a lead time for the change from the sleep mode to the active mode,
wherein the access point (6) is designed to transmit data content to the radio wake-up transmitter (21), wherein the data content serves to address a group of radio wake-up receivers (137), and
wherein the radio wake-up transmitter (21) is designed to transmit the data content in the wake-up signal or in addition to or delayed with respect to the wake-up signal, and
wherein the radio wake-up receiver (137) of the at least one shelf label client (2) is designed to recognize the data content and to check whether it is addressed by the data content,
**characterized in that**
the access point (6) is designed to address one group of radio wake-up receivers (137) each at successive time intervals, and that
the access point (6) is designed to distinguish between high-priority and low-priority radio communication and to dynamically adjust the size of a group of radio wake-up receivers (137) accordingly.

2. System (1) according to claim 1, wherein such a group comprises a number of 2 to 20, preferably 5 to 10, radio wake-up receivers (137).

3. System (1) according to one of claims 1 or 2, wherein the radio wake-up receiver (137) is designed to generate an activation signal when addressing is detected and to output the same to a client radio module (136) of the shelf label client (2), which is designed for radio communication according to the radio standard, wherein the client radio module (136) is designed to adopt its active mode as a result of the occurrence of the activation signal, in which initially a radio connection setup and subsequently a radio communication with the access point (6) can be carried out according to the radio standard.

4. System (1) according to one of the preceding claims, wherein the radio standard is a WLAN standard.

5. System (1) according to one of the preceding claims, wherein the radio wake-up receiver (137) is permanently in a ready-to-receive state.

6. System (1) according to one of the preceding claims, wherein the radio wake-up receiver (137) comprises a current consumption of less than 3 µA at a supply voltage of 1.8 volts and a data rate of 1 kbit/s.

7. System (1) according to one of the preceding claims, wherein the shelf label client (2) realizes an electronic shelf label (200), preferably with a display unit (13).

8. System (1) according to one of the preceding claims, wherein the shelf label client (2) realizes an electronic supply device (4) for contactless energy supply of a battery-free electronic shelf label (201).

9. Method for operating an electronic shelf label system (1)
wherein the system (1) comprises at least one battery-operated shelf label client (2) which comprises an energy-saving sleep mode without radio communication readiness according to a radio standard and an active mode with radio communication readiness according to the radio standard, and wherein the system (1) furthermore comprises an access point (6) that is designed for radio communication according to the radio standard with the at least one shelf label client (2),
wherein, according to the method, under the control of the access point (6), a wake-up signal is transmitted by means of a radio wake-up transmitter (21) of the access point (6) at the time at which a radio connection setup according to the radio standard is to initiated at the at least one shelf label client (2), in particular with sufficient lead time for a change from the sleep mode to the active mode, and
wherein the wake-up signal is received at the shelf label client (2) by means of a radio wake-up receiver (137) and the sleep mode is exited and the active mode is adopted, wherein
the access point (6) transmits data content to the radio wake-up transmitter (21), wherein the data content serves to address a group of radio wake-up receivers (137), and
the radio wake-up transmitter (21) sends the data content in the wake-up signal or in addition to the wake-up signal, and
the radio wake-up receiver (137) of the shelf label client (2) recognizes the data content and checks whether it is addressed by the data content,
**characterized in that**
the access point (6) addresses one group of radio wake-up receivers (137) each at successive time intervals and is designed to distinguish between high-priority and low-priority radio communication and to dynamically adjust the size of a group of radio wake-up receivers (137) accordingly.

10. Method according to claim 9, wherein a WLAN standard is used as the radio standard.

## Revendications

1. Système d'étiquetage de rayonnage électronique (1), qui comprend :
au moins un client d'étiquette de rayonnage actionné par batterie (2), qui comprend un mode veille à économie d'énergie sans disponibilité de radiocommunication selon une norme radio et un mode actif avec disponibilité de radiocommunication selon la norme radio et qui comporte un récepteur d'éveil radio (137), qui est constitué pour provoquer l'abandon du mode veille lors d'une réception d'un signal d'éveil et l'adoption du mode actif, et
un point d'accès (6), qui est constitué pour la radiocommunication selon la norme radio avec ledit au moins un client d'étiquette de rayonnage (2) et qui comporte un émetteur d'éveil radio (21) pour émettre le signal d'éveil, sachant que l' émetteur d'éveil radio (21) est constitué pouvant être commandé par le point d'accès (6) eu égard au moment d'émission du signal d'éveil et le point d'accès (6) définit le moment en tant qu'introduction d'un établissement de liaison radio selon la norme radio pour ledit au moins un client d'étiquette de rayonnage (2), en particulier avec un délai préliminaire pour le changement du mode de veille au mode actif,
sachant que le point d'accès (6) est constitué pour transmettre un contenu de données à l'émetteur d'éveil radio (21), sachant que le contenu de données sert à l'adressage d'un groupe de récepteurs d'éveil radio (137), et
sachant que l'émetteur d'éveil radio (21) est constitué pour envoyer dans le signal d'éveil ou en plus ou bien en différé au signal d'éveil le contenu de données, et
sachant que le récepteur d'éveil radio (137) dudit au moins un client d'étiquette de rayonnage (2) est constitué pour identifier le contenu de données et pour vérifier s'il est adressé par le contenu de données,
**caractérisé en ce que**
le point d'accès (6) est constitué pour l'adressage à chaque fois d'un groupe de récepteurs d'éveil radio (137) à des intervalles de temps successifs, et
le point d'accès (6) est constitué pour différencier entre une radiocommunication hautement priorisée ou faiblement priorisée et adapter en conséquence de façon dynamique la taille d'un groupe de récepteurs d'éveil radio (137).

2. Système (1) selon la revendication 1, sachant qu'un groupe de ce type comprend un nombre de 2 à 20, de préférence de 5 à 10, de récepteurs d'éveil radio (137).

3. Système (1) selon l'une quelconque des revendications 1 ou 2, sachant que le récepteur d'éveil radio (137) est constitué pour générer lors d'un adressage identifié un signal d'activation et le délivrer à un module client-radio (136) constitué pour la radiocommunication selon la norme radio du client d'étiquette de rayonnage (2), sachant que le module client-radio (136) est constitué à la suite de l'apparition du signal d'activation pour l'adoption de son mode actif dans lequel un établissement de liaison radio d'abord et ensuite une radiocommunication avec le point d'accès (6) peuvent être exécutés selon la norme radio.

4. Système (1) selon l'une quelconque des revendications précédentes, sachant que la norme radio est une norme de Réseau local sans fil (WLAN).

5. Système (1) selon l'une quelconque des revendications précédentes, sachant que le récepteur d'éveil radio (137) est constamment en disponibilité de réception.

6. Système (1) selon l'une quelconque des revendications précédentes, sachant que le récepteur d'éveil radio (137) comprend une consommation de courant de moins de 3 µA à une tension d'alimentation de 1,8 volt et un flux de données de 1 kbit/s.

7. Système (1) selon l'une quelconque des revendications précédentes, sachant que le client d'étiquette de rayonnage (2) réalise une étiquette de rayonnage électronique (200), de préférence avec une unité d'affichage (13).

8. Système (1) selon l'une quelconque des revendications précédentes, sachant que le client d'étiquette de rayonnage (2) réalise un dispositif d'alimentation électronique (4) pour l'alimentation en énergie sans contact d'une étiquette de rayonnage électronique sans batterie (201).

9. Procédé de fonctionnement d'un système d'étiquetage de rayonnage électronique (1),
sachant que le système (1) comprend au moins un client d'étiquette de rayonnage actionné par batterie (2), qui comprend un mode veille à économie d'énergie sans disponibilité de radiocommunication selon une norme radio et un mode actif avec disponibilité de radiocommunication selon la norme radio, et
sachant que le système (1) comprend en plus un point d'accès (6), qui est constitué pour la radiocommunication selon la norme radio avec ledit au moins un client d'étiquette de rayonnage (2),
sachant que selon le procédé un signal d'éveil est envoyé par commande du point d'accès (6) à l'aide d'un émetteur d'éveil radio (21) du point d'accès (6) au moment auquel un établissement de liaison radio selon la norme radio doit être introduit pour ledit au moins un client d'étiquette de rayonnage (2), en particulier avec un délai préliminaire suffisant pour un changement du mode de veille au mode actif, et
sachant que pour le client d'étiquette de rayonnage (2), le signal d'éveil est reçu à l'aide d'un récepteur d'éveil radio (137) et le mode de veille est quitté et le mode actif adopté, sachant que
le point d'accès (6) transmet un contenu de données à l'émetteur d'éveil radio (21), sachant que le contenu de données sert à l'adressage d'un groupe de récepteurs d'éveil radio (137), et
l'émetteur d'éveil radio (21) envoie le contenu de données dans le signal d'éveil ou en plus au signal d'éveil, et
le récepteur d'éveil radio (137) du client d'étiquette de rayonnage (2) identifie le contenu de données et vérifie s'il est adressé par le contenu de données,
**caractérisé en ce que**
le point d'accès (6) adresse à des intervalles de temps successifs respectivement un groupe de récepteurs d'éveil radio (137) et est constitué pour différencier entre une radiocommunication hautement priorisée et faiblement priorisée et adapter en conséquence de façon dynamique la taille d'un groupe de récepteurs d'éveil radio (137).

10. Procédé selon la revendication 9, sachant qu'une norme de Réseau local sans fil (WLAN) est utilisée en tant que norme radio.
